# EUROPÄISCHE PATENTSCHRIFT

(11) **EP 3 880 728 B1**
(45) Veröffentlichungstag und Bekanntmachung des Hinweises auf die Patenterteilung: **30.10.2024**
(21) Anmeldenummer: 19798109.5
(22) Anmeldetag: 11.11.2019
(51) Int. Cl.: C08G 18/48, C08G 18/71, C08G 18/76, C08G 18/10, C08G 18/30, C09J 175/08

(54) **HAFTVERBUND ZWISCHEN THERMOPLASTISCHEM KUNSTSTOFF UND ELASTOMER-ZUSAMMENSETZUNG**
ADHESIVE BOND BETWEEN THERMOPLASTIC AND ELASTOMER COMPOSITION
RACCORDEMENT ADHÉSIF ENTRE UNE MATIÈRE THERMOPLASTIQUE ET UNE COMPOSITION D'ÉLASTOMÈRE

(30) Priorität: 14.11.2018 EP 18206323
(43) Veröffentlichungstag der Anmeldung: 22.09.2021
(73) Patentinhaber: Sika Technology AG, 6340 Baar (CH)
(72) Erfinder: KRAMER, Andreas, 8008 Zürich (CH); BURCKHARDT, Urs, 8049 Zürich (CH); SCHLUMPF, Michael, 8143 Stallikon (CH); DEMMIG, Martin, 25451 Quickborn (DE)
(74) Vertreter: Sika Patent Attorneys
(86) Internationale Anmeldenummer: PCT/EP2019/080847
(87) Internationale Veröffentlichungsnummer: WO 2020/099308

(56) Entgegenhaltungen:
- EP-A1- 2 158 283
- EP-A1- 2 158 283
- EP-A1- 2 870 214
- EP-A1- 2 870 214
- EP-B1- 2 158 283
- EP-B1- 2 870 214
- CN-A- 109 096 947
- US-A1- 2011 071 254
- US-A1- 2011 071 254
- US-A1- 2011 171 465
- US-A1- 2011 171 465
- US-A1- 2015 126 678
- US-A1- 2015 126 678
- US-B2- 9 714 316
- US-B2- 9 714 316

## Beschreibung

### Technisches Gebiet

Die Erfindung betrifft Haftverbunde zwischen thermoplastischen Kunststoffen und Elastomer-Zusammensetzungen.

### Stand der Technik

In modernen Konstruktionsweisen im Bau und in der industriellen Fertigung werden immer mehr Kunststoffe eingesetzt, die herkömmliche Materialien wie Glas oder Metalle verdrängen. Die Vorteile der Kunststoffe liegen dabei unter anderem im geringen spezifischen Gewicht, der Isolierungswirkung, der einfachen Formgebung oder den niedrigen Kosten. Allerdings bringt der Einsatz von Kunststoffen auch Herausforderungen mit sich, insbesondere hinsichtlich der damit durchgeführten Fertigungsverfahren wie Kleben oder Beschichten. So sind viele der gebräuchlichen thermoplastischen Kunststoffe, wie insbesondere Polycarbonat oder Polystyrol, empfindlich auf Spannungsrissbildung (Crazing). Die Spannungsrisse entstehen durch eine Kombination aus von aussen in den Kunststoff eindringende Substanzen, welche den Kunststoff schwächen, und Zugspannungen, welche herstellungsbedingt als Eigenspannung im Kunststoff vorliegen und durch das Fertigungsverfahren von aussen auf den Kunststoff einwirken. Werden Substrate aus solchen Kunststoffen zum Beispiel mittels marktgängiger elastischer Klebstoffe, beispielsweise auf Basis von Polyurethanen oder silanmodifizierten Polymeren, verklebt und damit über die aus dem gehärteten Klebstoff entstehende Elastomer-Zusammensetzung gefügt, ist die Spannungsrissbildung oft so stark, dass sie zur Deformation oder zum Bruch des Kunststoffs und/oder zum Verlust der Haftung zur Elastomer-Zusammensetzung und damit zum Versagen des Haftverbunds führt. Die Spannungsrissbildung wird dabei zumeist ausgelöst von Lösemitteln oder Weichmachern, welche in den Klebstoffen bzw. Elastomer-Zusammensetzungen zur Einstellung der Viskosität und Elastizität typischerweise enthalten sind. Da diese chemisch nicht in die Polymer-Matrix eingebunden sind, können sie durch Diffusion aus der Elastomer-Zusammensetzung in den Kunststoff eindringen (migrieren) und diesen schwächen. Zwar kann die Kunststoff-Oberfläche durch eine geeignete Vorbehandlung, beispielsweise mittels eines Primers, vor dem Kontakt mit diffundierenden Substanzen geschützt werden; trotzdem wird dadurch oft kein sicherer Schutz vor Spannungsrissbildung erreicht, da die Vorbehandlung nicht in ausreichender Breite und Schichtdicke aufgetragen wird oder nicht für alle Arten von diffundierenden Substanzen vollständig undurchdringbar ist. Beispielsweise offenbart US 2011/071254 A1 einen Haftverbund zwischen PMMA und einer Zusammensetzung enthaltend ein Silangruppen-haltiges Polyether-Blockcopolymer und einen konventionellen Weichmacher (Mesamoll). Ähnliche Haftverbunde werden in EP 2 158 283 A1, US 9 714 316 B2, EP 2 870 214 A1, US 2015/126678 A1, sowie US 2011/171465 A1 beschrieben, wobei in all diesen Fällen ebenfalls Silangruppen-haltige Polyether-basierte Polymere zum Einsatz kommen. Solche Silangruppen-haltige Polymere sind jedoch zu Vernetzungsreaktionen befähigt.

### Darstellung der Erfindung

Aufgabe der vorliegenden Erfindung ist es daher, einen Haftverbund zwischen einem thermoplastischen Kunststoff und einer Elastomer-Zusammensetzung zur Verfügung zu stellen, welcher die Nachteile des Standes der Technik in Bezug auf Spannungsrissbildung überwindet.

Diese Aufgabe wird mit einem Haftverbund wie in Anspruch 1 beschrieben gelöst. Mit dem erfindungsgemässen Haftverbund gelingt es, thermoplastische Kunststoffe wie insbesondere Polycarbonat oder Polystyrol im Wesentlichen ohne Spannungsrissbildung und damit zuverlässig und dauerhaft mit der Elastomer-Zusammensetzung zu verbinden, insbesondere auch bei unvollkommener oder fehlender Vorbehandlung der Kunststoff-Oberfläche. Dies ist äusserst überraschend, da der in der Elastomer-Zusammensetzung als Weichmacher enthaltene Polyether mit blockierten Hydroxylgruppen, der frei von Reaktivgruppen ist, welche mit Feuchtigkeit oder mit in der Zusammensetzung vorhandenen Inhaltsstoffen Vernetzungsreaktionen eingehen, dünnflüssig ist und stark elastifizierend wirkt, was eher mehr Spannungsrissbildung erwarten liesse. Im erfindungsgemässen Haftverbund entstehen auch unter äusserer Spannung und unter Temperaturbelastung kaum Spannungsrisse, während Haftverbunde mit herkömmlichen Elastomer-Zusammensetzungen, welche handelsübliche Weichmacher wie insbesondere Diisononylphthalat (DINP), Diisodecylphthalat (DIDP), Diisononyl-1 ,2-cyclohexandicarboxylat (DINCH), Dioctyladipat bzw. Di(2-ethylhexyl)adipat (DOA), Acetyltributylcitrat (ATBC) oder aliphatische Fettsäureester enthalten, bereits nach kurzer Zeit viele Spannungsrisse bilden, die sich mit der Zeit so stark vertiefen können, dass es schliesslich zum Versagen des Haftverbunds durch Adhäsions- oder Substratbruch kommt.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Haftverbund zwischen (i) mindestens einem thermoplastischen Kunststoff und (ii) einer Elastomer-Zusammensetzung enthaltend mindestens einen Polyether mit blockierten Hydroxylgruppen als Weichmacher, wobei der Polyether mit blockierten Hydroxylgruppen frei von Reaktivgruppen ist, welche mit Feuchtigkeit oder mit in der Zusammensetzung vorhandenen Inhaltsstoffen Vernetzungsreaktionen eingehen.

Als "Elastomer-Zusammensetzung" wird ein elastisch verformbares Kunststoffhaltiges Material bezeichnet.

Als "härtbare Zusammensetzung" wird eine Zusammensetzung enthaltend polymerisierbare Makromoleküle bezeichnet, die durch Vernetzungsreaktionen ihrer Reaktivgruppen zu einer Elastomer-Zusammensetzung aushärten kann.

Als "Polyether" wird ein Molekül bzw. eine Gruppe von oligomeren und/oder polymeren Molekülen bezeichnet, welche mehrheitlich aus Alkylenoxy-Repetiereinheiten bestehen.

Als "blockierte Hydroxylgruppe" wird eine durch chemische Reaktion zu einer gegenüber Isocyanatgruppen nicht reaktiven Gruppe umgesetzte Hydroxylgruppe bezeichnet.

Als "Weichmacher" werden schwerflüchtige Substanzen bezeichnet, welche im Polymer nicht chemisch eingebunden sind und auf dieses eine weichmachende Wirkung ausüben.

Als "Silangruppe" wird eine an einen organischen Rest gebundene Silylgruppe mit einem bis drei, insbesondere zwei oder drei, hydrolysierbaren Alkoxy-Resten am Silicium-Atom bezeichnet.

Als "Silan" werden sowohl Organoalkoxysilane, welche eine bis drei organische Substituenten an jeder Silangruppe tragen, als auch Tetraalkoxysilane bezeichnet. Silane, die an einem organischen Rest zusätzlich zur Silangruppe eine oder mehrere Hydroxyl-, Isocyanato-, Amino- bzw. Mercaptogruppen tragen, werden als "Hydroxysilan", "Isocyanatosilan", "Aminosilan" bzw. "Mercaptosilan" bezeichnet.

Mit "Poly" beginnende Substanznamen wie Polyamin, Polyol oder Polyisocyanat bezeichnen Substanzen, die formal zwei oder mehr der in ihrem Namen vorkommenden funktionellen Gruppen pro Molekül enthalten.

Als "Molekulargewicht" wird die molare Masse (in Gramm pro Mol) eines Moleküls oder eines Molekül-Rests bezeichnet. Als "mittleres Molekulargewicht" wird das Zahlenmittel des Molekulargewichts (Mₙ) einer polydispersen Mischung von oligomeren oder polymeren Molekülen oder Molekül-Resten bezeichnet. Es wird üblicherweise mittels Gelpermeationschromatographie (GPC) gegen Polystyrol als Standard bestimmt.

Als "lagerstabil" oder "lagerfähig" wird eine härtbare Zusammensetzung bezeichnet, die bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Raumtemperatur" wird eine Temperatur von 23°C bezeichnet.

Der thermoplastische Kunststoff ist insbesondere ein sogenannter Spannungsriss-bildender Kunststoff, also ein Kunststoff, welcher unter Belastung durch Zugspannung und eindringende Substanzen zur Bildung von Spannungsrissen neigt. Dieser Prozess wird auch als umgebungsbedingte Spannungsrissbildung (environmental stress cracking, ESC) bezeichnet.

Der thermoplastische Kunststoff ist bevorzugt ausgewählt aus der Gruppe bestehend aus Polycarbonat, Polyester, Polymethylmethacrylat (PMMA), Polystyrol und Styrol-Acrylnitril (SAN).

Der thermoplastische Kunststoff ist insbesondere Polycarbonat oder Polystyrol. Diese Kunststoffe sind besonders empfindlich auf die Bildung von Spannungsrissen.

Am meisten bevorzugt ist Polycarbonat, insbesondere ein auf Bisphenol A basierendes Polycarbonat. Ein solcher Kunststoff ist transparent, vergleichsweise hart, schlagzäh und wenig kratzempfindlich. Er wird oft als Alternative zu Glas eingesetzt, und der Bedarf nach Elastomer-Zusammensetzungen, mit welchen ein solcher Kunststoff verklebt oder beschichtet werden kann, ist dementsprechend hoch.

Kommerzielle Polycarbonate sind insbesondere erhältlich unter dem Markennamen Makrolon^{®} (von Covestro AG) oder Lexan^{®} (von SABIC).

Der Polyether mit blockierten Hydroxylgruppen ist im Wesentlichen frei von nicht blockierten Hydroxylgruppen. Dabei bedeutet "im Wesentlichen frei von", dass 95 %, bevorzugt 99 %, insbesondere 99.9%, am meisten bevorzugt 100 %, der vorhandenen Hydroxylgruppen blockiert sind.

Der Polyether mit blockierten Hydroxylgruppen ist in der Elastomer-Zusammensetzung als Weichmacher enthalten. Er ist dementsprechend frei von Reaktivgruppen, welche mit Feuchtigkeit oder mit in der Zusammensetzung vorhandenen Inhaltsstoffen Vernetzungsreaktionen eingehen. Er ist insbesondere frei von Isocyanatgruppen und Silangruppen.

Der Polyether mit blockierten Hydroxylgruppen ist insbesondere bei Raumtemperatur flüssig.

Bevorzugt weist der Polyether mit blockierten Hydroxylgruppen eine Viskosität bei 20°C im Bereich von 30 bis 5'000 mPa·s, mehr bevorzugt 40 bis 2'000 mPa·s, besonders bevorzugt 50 bis 1'000 mPas, insbesondere 50 bis 500 mPas, auf. Dabei wird die Viskosität bestimmt mit einem Kegel-Platten-Viskosimeter mit Kegeldurchmesser 25 mm, Kegelwinkel 1°, Kegelspitze-Platten-Abstand 0.05 mm bei einer Scherrate von 10 s⁻¹. Ein solcher Polyether ist gut handhabbar und ermöglicht sehr flexible Elastomer-Zusammensetzungen.

Bevorzugt sind die blockierten Hydroxylgruppen ausgewählt aus der Gruppe bestehend aus Ester-, Acetoester-, Carbonat- und Urethangruppen.

Zu den Urethangruppen zählen auch Sulfonylurethangruppen.

Bevorzugt weisen diese Ester-, Acetoester-, Carbonat- oder Urethangruppen 1 bis 15 C-Atome auf.

Besonders bevorzugt sind Ester- oder Urethangruppen. Zu diesen Gruppen sind Hydroxylgruppen besonders einfach umsetzbar.

Ganz besonders bevorzugt ist eine Estergruppe, insbesondere eine Estergruppe mit 1 bis 8 C-Atomen.

Am meisten bevorzugt ist eine Acetatgruppe. Ein Polyether mit blockierten Hydroxylgruppen in Form von Acetatgruppen ist besonders niedrigviskos, ganz besonders einfach zugänglich und besonders preisgünstig.

Weiterhin bevorzugt ist eine Urethangruppe, insbesondere eine Phenylurethangruppe oder eine p-Toluolsulfonylurethangruppe. Ein Polyether mit solchen blockierten Hydroxylgruppen weist eine handhabbare Viskosität auf und ist besonders einfach herstellbar.

Bevorzugt als Acetoestergruppe ist eine Acetoacetatgruppe.

Bevorzugt als Carbonatgruppe ist eine Methylcarbonatgruppe.

Diese sind niedrigviskos und aus preisgünstigen Ausgangsstoffen zugänglich.

Bevorzugt weist der Polyether mit blockierten Hydroxylgruppen als Repetiereinheiten 1,2-Ethylenoxy-, 1,2-Propylenoxy-, 1,3-Propylenoxy-, 1,2-Butylenoxy- oder 1,4-Butylenoxy-Gruppen, insbesondere 1,2-Propylenoxy-Gruppen, auf.

Bevorzugt bestehen 70 bis 100 Gewichts-%, insbesondere 80 bis 100 Gewichts-%, der Repetiereinheiten aus 1,2-Propylenoxy-Gruppen und 0 bis 30 Gewichts-%, insbesondere 0 bis 20 Gewichts-%, der Repetiereinheiten aus 1,2-Ethylenoxy-Gruppen.

Besonders bevorzugt bestehen die Repetiereinheiten zu 100 % aus 1,2-Propylenoxy-Gruppen.

Solche Polyether sind einfach verfügbar, hydrophob und somit besonders geeignet als Bestandteil von Elastomer-Zusammensetzungen mit geringer Wasseraufnahme und guter Beständigkeit.

Bevorzugt weist der Polyether mit blockierten Hydroxylgruppen ein mittleres Molekulargewicht Mₙ im Bereich von 600 bis 12'500 g/mol, mehr bevorzugt 700 bis 8'500 g/mol, besonders bevorzugt 800 bis 4'500 g/mol, insbesondere 800 bis 2'500 g/mol, auf, bestimmt mittels Gelpermeationschromatographie (GPC) gegen Polystyrol als Standard mit Tetrahydrofuran als mobiler Phase, Brechungsindex-Detektor und Auswertung ab 200 g/mol.

Solche Polyether mit blockierten Hydroxylgruppen verfügen über eine gut handhabbare Viskosität und verursachen in Elastomer-Zusammensetzungen weder Emission noch Geruch.

In einer bevorzugten Ausführungsform liegt das mittlere Molekulargewicht Mₙ des Polyethers mit blockierten Hydroxylgruppen im Bereich von 700 bis 2'500 g/mol, bevorzugt 800 bis 2'500 g/mol. Ein solcher Polyether ist besonders niedrigviskos und besonders gut handhabbar und weist gute Eigenschaften in Bezug auf Anfälligkeit für Spannungsrisse im Haftverbund auf.

In einer weiteren bevorzugten Ausführungsform liegt das mittlere Molekulargewicht Mₙ des Polyethers mit blockierten Hydroxylgruppen im Bereich von 2'500 bis 12'500 g/mol, insbesondere 4'000 bis 8'500 g/mol. Ein solcher Polyether weist eine handhabbare Viskosität auf und ermöglicht Haftverbunde, bei welchen auch auf besonders empfindlichen thermoplastischen Kunstsstoffen keine Spannungsrisse auftreten.

Bevorzugt ist der Polyether mit blockierten Hydroxylgruppen abgeleitet von mindestens einem hydroxyfunktionellen Polyether ausgewählt aus der Gruppe bestehend aus
- Alkohol-, insbesondere n-Butanol-, gestarteten Polyoxypropylen-Monolen mit einer OH-Zahl im Bereich von 25 bis 90 mg KOH/g, bevorzugt 50 bis 80 mg KOH/g,
- Polyoxypropylen-Diolen mit einer OH-Zahl im Bereich von 9 bis 155 mg KOH/g, bevorzugt 14 bis 125 mg KOH/g,
- Trimethylolpropan- oder insbesondere Glycerin-gestarteten, gegebenenfalls Ethylenoxid-terminierten, Polyoxypropylen-Triolen mit einer mittleren OH-Funktionalität im Bereich von 2.2 bis 3 und einer OH-Zahl im Bereich von 20 bis 230 mg KOH/g, bevorzugt 20 bis 165 mg KOH/g, und
- Zuckeralkohol-gestarteten Polyoxypropylenpolyolen mit einer mittleren OH-Funktionalität im Bereich von 3 bis 6, insbesondere mit Threit, Erythrit, Xylit, Mannit oder Sorbit als Startermolekül. Ein solcher Polyether mit blockierten Hydroxylgruppen ist kommerziell erhältlich als Sanflex^{®} SPX-80 (von Sanyo Chem. Ind.).

In einer Ausführungsform der Erfindung ist der Polyether mit blockierten Hydroxylgruppen insbesondere abgeleitet von einem Alkohol-, insbesondere n-Butanol-, gestarteten Polyoxypropylen-Monol mit einer OH-Zahl im Bereich von 25 bis 90 mg KOH/g, bevorzugt 50 bis 80 mg KOH/g, oder einem Polyoxypropylen-Diol mit einer OH-Zahl im Bereich von 45 bis 125 mg KOH/g. Diese sind besonders preisgünstig und niedrigviskos.

In einer weiteren Ausführungsform der Erfindung ist der Polyether mit blockierten Hydroxylgruppen insbesondere abgeleitet von einem Polyoxypropylen-Diol mit einer OH-Zahl im Bereich von 14 bis 45 mg KOH/g, insbesondere 14 bis 28 mg KOH/g, oder einem Trimethylolpropan- oder insbesondere Glycerin-gestarteten, gegebenenfalls Ethylenoxid-terminierten, Polyoxypropylen-Triol mit einer OH-Zahl im Bereich von 20 bis 56 mg KOH/g. Ein solcher Polyether ermöglicht Haftverbunde, bei welchen auch bei besonders empfindlichen thermoplastischen Kunststoffen keine Spannungsrisse auftreten.

Besonders bevorzugt ist der Polyether mit blockierten Hydroxylgruppen abgeleitet von einem Polyoxypropylen-Diol mit einer OH-Zahl im Bereich von 14 bis 125 mg KOH/g. Diese sind besonders preisgünstig.

Der Polyether mit blockierten Hydroxylgruppen wird insbesondere erhalten durch Umsetzung von mindestens einem hydroxyfunktionellen Polyether mit mindestens einem geeigneten Blockierungsmittel für Hydroxylgruppen.

Für die Umsetzung wird das Blockierungsmittel mindestens stöchiometrisch in Bezug auf die Hydroxylgruppen eingesetzt, so dass die Hydroxylgruppen im Wesentlichen vollständig blockiert werden und der erhaltene Polyether somit im Wesentlichen frei ist von Hydroxylgruppen. Für die Blockierung werden für die jeweiligen Reaktivgruppen übliche Verfahren eingesetzt, gegebenenfalls unter Mitverwendung von Katalysatoren oder Lösemitteln. Falls bei der Blockierungsreaktion Abspalter entstehen, werden diese mit einer geeigneten Methode aus der Reaktionsmischung entfernt, insbesondere mittels Destillation.

Als Blockierungsmittel geeignet sind nucleophile Verbindungen, welche mit Hydroxylgruppen eine Additions- oder Substitutionsreaktion eingehen.

Geeignet sind insbesondere Carbonsäuren, Carbonsäurechloride, Carbonsäureester oder Carbonsäureanhydride, Diketen, 2,2,5-Trimethyl-4H-1 ,3-dioxin-4-on, Alkylacetoacetate, Dialkylcarbonate, Monoisocyanate, (Meth)acrylamide, Methylenmalonate oder Cyanacrylate.

Bevorzugt sind Carbonsäuren, Carbonsäurechloride, Carbonsäureester oder Carbonsäureanhydride, wobei blockierte Hydroxylgruppen in Form von Estergruppen entstehen. Davon bevorzugt sind Carbonsäureanhydride oder Carbonsäureester, insbesondere Essigsäureanhydrid.

Im Fall von Essigsäureanhydrid als Blockierungsmittel wird bei der Umsetzung Essigsäure freigesetzt, wobei blockierte Hydroxylgruppen in Form von Acetatgruppen entstehen.

Im Fall von Isopropenylacetat als Blockierungsmittel wird bei der Umsetzung Aceton freigesetzt, wobei ebenfalls blockierte Hydroxylgruppen in Form von Acetatgruppen entstehen.

Bevorzugt sind weiterhin Diketen, 2,2,5-Trimethyl-4H-1,3-dioxin-4-on oder sterisch gehinderte Alkylacetoacetate wie insbesondere tert.Butylacetoacetat, wobei blockierte Hydroxylgruppen in Form von Acetoestergruppen entstehen.

Bevorzugt sind weiterhin Dialkylcarbonate, insbesondere Dimethylcarbonat, wobei blockierte Hydroxylgruppen in Form von Carbonatgruppen, insbesondere Methylcarbonatgruppen, entstehen.

Bevorzugt sind weiterhin Monoisocyanate, wobei blockierte Hydroxylgruppen in Form von Urethangruppen entstehen. Bevorzugt sind Phenylisocyanat oder p-T oluolsu lfonylisocyanat.

Als hydroxyfunktioneller Polyether geeignet sind insbesondere solche mit einer mittleren OH-Funktionalität im Bereich von 1 bis 6 und einem mittleren Molekulargewicht Mₙ im Bereich von 500 bis 12'500 g/mol, mehr bevorzugt 600 bis 8'500 g/mol, besonders bevorzugt 700 bis 4'500 g/mol, insbesondere 700 bis 2'500 g/mol.

Bevorzugt sind Polyoxypropylen-Monole mit einer OH-Zahl im Bereich von 25 bis 90 mg KOH/g, bevorzugt 50 bis 80 mg KOH/g, insbesondere Alkohol-gestartete Polyoxypropylen-Monole, insbesondere gestartet von Methanol, Ethanol, Propanol, Isopropanol, n-Butanol, Isobutanol, tert.Butanol, Pentanol, Hexanol, 2-Ethylhexanol, Laurylalkohol, Myristylalkohol, Palmitylalkohol, Allylalkohol, Cyclohexanol, Benzylalkohol oder Phenol. Davon bevorzugt sind Alkylalkohol-gestartete Polyoxypropylenmonole, insbesondere gestartet von Methanol, Ethanol oder n-Butanol. Besonders bevorzugt sind n-Butanol-gestartete Polyoxypropylen-Monole mit einem mittleren Molekulargewicht Mₙ im Bereich von 650 bis 2'000 g/mol, insbesondere 700 bis 1'500 g/mol. n-Butanol-gestartete Polyoxypropylen-Monole sind kommerziell erhältlich, beispielsweise als Synalox^{®} 100-20B, Synalox^{®} 100-40B oder Synalox^{®} 100-85B (alle von DowDuPont Inc.).

Weiterhin bevorzugt sind Polyoxypropylen-Diole mit einer OH-Zahl im Bereich von 9 bis 155 mg KOH/g, bevorzugt 14 bis 125 mg KOH/g.

Weiterhin bevorzugt sind Trimethylolpropan- oder insbesondere Glycerin-gestartete, gegebenenfalls Ethylenoxid-terminierte, Polyoxypropylen-Triole mit einer mittleren OH-Funktionalität im Bereich von 2.2 bis 3 und einer OH-Zahl im Bereich von 20 bis 230 mg KOH/g, bevorzugt 20 bis 165 mg KOH/g.

Weiterhin bevorzugt sind Zuckeralkohol-gestartete Polyoxypropylenpolyole mit einer mittleren OH-Funktionalität von mindestens 3, insbesondere im Bereich von 3 bis 6, insbesondere mit Threit, Erythrit, Xylit, Mannit oder Sorbit als Startermolekül.

Die Elastomer-Zusammensetzung enthält bevorzugt mindestens ein ausgehärtetes Polyurethanpolymer oder ausgehärtetes silanmodifiziertes Polymer.

Die Elastomer-Zusammensetzung kann weitere Substanzen enthalten, insbesondere die folgenden Zusätze:
- Füllstoffe, insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, industriell hergestellte Russe, Graphit, Metall-Pulver, beispielsweise von Aluminium, Kupfer, Eisen, Silber oder Stahl, PVC-Pulver oder Hohlkugeln;
- anorganische oder organische Pigmente, insbesondere Titandioxid, Chromoxide oder Eisenoxide;
- zusätzliche Weichmacher, insbesondere Carbonsäureester wie Phthalate, insbesondere Diisononylphthalat (DINP), Diisodecylphthalat (DIDP) oder Di(2-propylheptyl)phthalat (DPHP), hydrierte Phthalate bzw. 1,2-Cyclohexandicarbonsäureester, insbesondere hydriertes Diisononylphthalat bzw. Diisononyl-1,2-cyclohexandicarboxylat (DINCH), Terephthalate, insbesondere Bis(2-ethylhexyl)terephthalat (DOTP) oder Diisononylterephthalat (DINT), hydrierte Terephthalate bzw. 1,4-Cyclohexandicarbonsäureester, insbesondere hydriertes Bis(2-ethylhexyl)terephthalat bzw. Bis(2-ethylhexyl)-1,4-cyclohexandicarboxylat oder hydriertes Diisononylterephthalat bzw. Diisononyl-1,4-cyclohexandicarboxylat, Isophthalate, Trimellitate, Adipate, insbesondere Dioctyladipat, Azelate, Sebacate, Benzoate, Glykolether, Glykolester, organische Phosphor- oder Sulfonsäureester, Polybutene, Polyisobutene oder von natürlichen Fetten oder Ölen abgeleitete Weichmacher, insbesondere epoxidiertes Soja- oder Leinöl, besonders bevorzugt Diisononylphthalat, Diisodecylphthalat oder Diisononyl-1,2-cyclohexandicarboxylat;
- Fasern, insbesondere Glasfasern, Kohlefasern, Metallfasern, Keramikfasern, Kunststofffasern wie Polyamidfasern oder Polyethylenfasern, oder Naturfasern wie Wolle, Cellulose, Hanf oder Sisal;
- Nanofüllstoffe wie Graphen oder Carbon Nanotubes;
- Farbstoffe;
- natürliche Harze, Fette oder Öle;
- nicht-reaktive Polymere, insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO);
- flammhemmende Substanzen, insbesondere die bereits genannten Füllstoffe Aluminiumhydroxid oder Magnesiumhydroxid, sowie insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)phosphat, isopropyliertes Triphenylphosphat, Mono-, Bis- oder Tris(isopropylphenyl)phosphate unterschiedlichen Isopropylierungsgrades, Resorcinol-bis(diphenylphosphat), Bisphenol-A-bis(diphenylphosphat) oder Ammoniumpolyphosphate; oder
- Additive, insbesondere Netzmittel, Verlaufmittel, Entschäumer, Entlüfter, Stabilisatoren gegen Oxidation, Wärme, Licht oder UV-Strahlung oder Biozide.

Die Elastomer-Zusammensetzung enthält bevorzugt 5 bis 40, insbesondere 5 bis 30, Gewichts-% Polyether mit blockierten Hydroxylgruppen.

Eine besonders bevorzugte Elastomer-Zusammensetzung umfasst
- 20 bis 80, insbesondere 25 bis 70, Gewichts-% ausgehärtetes Polymer,
- 10 bis 60, insbesondere 20 bis 60, Gewichts-% Füllstoffe, und
- 5 bis 40, insbesondere 5 bis 30, Gewichts-% Polyether mit blockierten Hydroxylgruppen.

Die Elastomer-Zusammensetzung weist bevorzugt eine Zugfestigkeit von mindestens 1 MPa, insbesondere mindestens 1.5 MPa, und eine Bruchdehnung von mindestens 50%, insbesondere mindestens 100%, bestimmt bei 23°C an hantelförmigen Prüfkörpern mit einer Dicke von 2 mm, einer Länge von 75 mm, einer Steglänge von 30 mm und einer Stegbreite von 4 mm gemäss DIN EN 53504, auf.

Die Elastomer-Zusammensetzung weist im erfindungsgemässen Haftverbund bevorzugt eine Schichtdicke im Bereich von 0.5 bis 50 mm, bevorzugt 1 bis 30 mm, auf.

Der erfindungsgemässe Haftverbund wird bevorzugt erhalten aus einem Verfahren umfassend die Schritte
(a) Bereitstellen von mindestens einem thermoplastischen Kunststoff-Substrat,
(b) Bereitstellen einer härtbaren Zusammensetzung, welche mindestens einen Polyether mit blockierten Hydroxylgruppen als Weichmacher enthält, wobei der Polyether mit blockierten Hydroxylgruppen frei von Reaktivgruppen ist, welche mit Feuchtigkeit oder mit in der Zusammensetzung vorhandenen Inhaltsstoffen Vernetzungsreaktionen eingehen,
(c) Applizieren der härtbaren Zusammensetzung auf das Kunststoff-Substrat,
(d) Aushärten der härtbaren Zusammensetzung zur Elastomer-Zusammensetzung.

Die härtbare Zusammensetzung stellt insbesondere einen Klebstoff, einen Dichtstoff oder eine Beschichtung dar. Bevorzugt stellt sie einen Klebstoff dar.

Das Verfahren wird bevorzugt bei Umgebungstemperatur durchgeführt, insbesondere bei einer Temperatur im Bereich von etwa -10 bis 50°C, bevorzugt im Bereich von -5 bis 45°C, insbesondere 0 bis 40°C.

Schritt (a) umfasst bevorzugt eine Reinigung des Kunststoff-Substrates, wobei Staub und gegebenenfalls vorhandene Verschmutzungen entfernt werden, insbesondere mittels einem das Kunststoff-Substrat nicht angreifenden Reinigungsmittel.

Gegebenenfalls umfasst Schritt (a) auch eine Vorbehandlung des Kunststoff-Substrates mit einem Aktivator und/oder Primer. Dieser wird in dünner Schicht auf das Kunststoff-Substrat aufgetragen und anschliessend abgelüftet. Dabei verdampft das im Aktivator und/oder Primer enthaltene Lösemittel und hinterlässt das vorbehandelte Kunststoff-Substrat. Bevorzugt enthält der Aktivator und/oder Primer dabei keine das Kunststoff-Substrat angreifenden Inhaltsstoffe.

Schritt (b) umfasst im Fall einer mehrkomponentigen härtbaren Zusammensetzung das Vermischen der Komponenten zu einer makroskopisch homogenen Paste oder Flüssigkeit.

Schritt (d) umfasst typischerweise eine Wartezeit bei Umgebungstemperatur im Bereich von einer Stunde bis zu einer Woche. Im Fall einer feuchtigkeitshärtenden Zusammensetzung steht die applizierte Zusammensetzung dabei in Kontakt mit Luftfeuchtigkeit. Falls gewünscht, kann der Haftverbund erwärmt werden, beispielsweise auf eine Temperatur im Bereich von 20 bis 120°C.

Im Verlauf von Schritt (d) baut die aushärtende Zusammensetzung eine Haftung zum Kunststoff-Substrat auf und kann nach erfolgtem Schritt (d) nur noch mit einem gewissen Kraftaufwand, bevorzugt nur unter Zerstörung der entstandenen Elastomer-Zusammensetzung, vom Kunststoff-Substrat gelöst werden.

Die härtbare Zusammensetzung für die Herstellung des erfindungsgemässen Haftverbundes weist bevorzugt Isocyanat- und/oder Silangruppen auf, insbesondere Isocyanatgruppen.

Bevorzugt enthält die härtbare Zusammensetzung mindestens ein Isocyanat- und/oder Silangruppen-haltiges Polymer. Eine solche Zusammensetzung härtet mittels Luftfeuchtigkeit oder durch Zumischen einer Komponente, welche typischerweise Polyole, Amine, latente Härter oder Wasser oder eine Kombination davon enthält, zu einer Elastomer-Zusammensetzung aus.

Bevorzugt ist das Isocyanat- und/oder Silangruppen-haltige Polymer bei Raumtemperatur flüssig.

Bevorzugt ist die härtbare Zusammensetzung eine einkomponentige oder zweikomponentige Zusammensetzung.

Als "einkomponentig" wird eine Zusammensetzung bezeichnet, bei welcher alle Bestandteile der Zusammensetzung im gleichen Gebinde vorliegen, welche als solche lagerstabil ist und welche mit Feuchtigkeit härtbar ist.

Als "zweikomponentig" wird eine Zusammensetzung bezeichnet, bei welcher die Bestandteile der Zusammensetzung in zwei verschiedenen Komponenten vorliegen, welche in voneinander getrennten Gebinden gelagert und erst kurz vor oder während der Applikation der Zusammensetzung miteinander vermischt werden.

Besonders bevorzugt enthält die härtbare Zusammensetzung mindestens ein Isocyanatgruppen-haltiges Polymer.

Ein geeignetes Isocyanatgruppen-haltiges Polymer wird insbesondere erhalten aus der Umsetzung von mindestens einem Polyol mit einer überstöchiometrischen Menge von mindestens einem Diisocyanat. Die Umsetzung wird bevorzugt unter Feuchtigkeitsausschluss bei einer Temperatur im Bereich von 20 bis 160°C, insbesondere 40 bis 140°C, durchgeführt, gegebenenfalls in Anwesenheit geeigneter Katalysatoren. Gegebenenfalls wird das Polymer unter Mitverwendung von Weichmachern oder Lösemitteln hergestellt, wobei die verwendeten Weichmacher oder Lösemittel keine gegenüber Isocyanaten reaktive Gruppen enthalten.

Für die Verwendung in einer zweikomponentigen Zusammensetzung wird der Überschuss an Polyisocyanat bevorzugt so gewählt, dass im Isocyanatgruppen-haltigen Polymer nach der Umsetzung aller Hydroxylgruppen ein Gehalt an Isocyanatgruppen im Bereich von 1 bis 30 Gewichts-%, bevorzugt 1.5 bis 25 Gewichts-%, besonders bevorzugt 2 bis 20 Gewichts-%, bezogen auf das gesamte Polymer verbleibt.

Ein solches Isocyanatgruppen-haltiges Polymer weist bevorzugt ein mittleres Molekulargewicht Mₙ im Bereich von 350 bis 6'000 g/mol auf.

Für die Verwendung in einer einkomponentigen Zusammensetzung liegt das NCO/OH-Verhältnis bevorzugt im Bereich von 1.3/1 bis 10/1. Das nach der Umsetzung der OH-Gruppen im Reaktionsgemisch verbleibende monomere Diisocyanat kann entfernt werden, insbesondere mittels Destillation.

Für den Fall, dass überschüssiges monomeres Diisocyanat mittels Destillation entfernt wird, liegt das NCO/OH-Verhältnis bei der Umsetzung bevorzugt im Bereich von 4/1 bis 7/1, und das erhaltene Isocyanatgruppen-haltige Polymer enthält nach der Destillation bevorzugt höchstens 0.5 Gewichts-%, besonders bevorzugt höchstens 0.3 Gewichts-%, monomeres Diisocyanat. Dabei wird monomeres Diisocyanat insbesondere mittels Kurzwegdestillation im Vakuum entfernt.

Für den Fall, dass kein überschüssiges monomeres Diisocyanat aus dem Polymer entfernt wird, liegt das NCO/OH-Verhältnis bei der Umsetzung bevorzugt im Bereich von 1.3/1 bis 2.5/1.

Das erhaltene Polymer hat bevorzugt einen Gehalt an Isocyanatgruppen im Bereich von 0.5 bis 10 Gewichts-%, insbesondere 1 bis 5 Gewichts-%, besonders bevorzugt 1 bis 3 Gewichts-% und ein mittleres Molekulargewicht Mₙ im Bereich von 1'500 bis 20'000 g/mol, insbesondere 2'000 bis 15'000 g/mol.

Bevorzugt sind aliphatische, cycloaliphatische oder aromatische Diisocyanate, insbesondere 1,6-Hexamethylendiisocyanat (HDI), 1-Isocyanato-3,3,5-trimethyl-5-isocyanatomethylcyclohexan (Isophorondiisocyanat oder IPDI), Perhydro-2,4'- und/oder-4,4'-diphenylmethandiisocyanat (H₁₂MDI), 4,4'-Diphenylmethandiisocyanat, gegebenenfalls mit Anteilen von 2,4'- und/oder 2,2'-Diphenylmethandiisocyanat (MDI), oder 2,4-Toluylendiisocyanat oder Gemische davon mit 2,6-Toluylendiisocyanat (TDI).

Besonders bevorzugt ist HDI, IPDI, MDI oder TDI, oder Gemische davon.

Geeignete Polyole sind handelsübliche Polyole oder Mischungen davon, insbesondere
- Polyetherpolyole, insbesondere Polyoxyalkylendiole und/oder Polyoxyalkylentriole, insbesondere Polymerisationsprodukte von Ethylenoxid oder 1,2-Propylenoxid oder 1,2- oder 2,3-Butylenoxid oder Oxetan oder Tetrahydrofuran oder Mischungen davon, wobei diese mit Hilfe eines Startermoleküls mit zwei oder drei aktiven Wasserstoffatomen polymerisiert sein können, insbesondere einem Startermolekül wie Wasser, Ammoniak oder einer Verbindung mit mehreren OH- oder NH-Gruppen wie beispielsweise 1,2-Ethandiol, 1,2- oder 1,3-Propandiol, Neopentylglykol, Diethylenglykol, Triethylenglykol, die isomeren Dipropylenglykole oder Tripropylenglykole, die isomeren Butandiole, Pentandiole, Hexandiole, Heptandiole, Octandiole, Nonandiole, Decandiole, Undecandiole, 1,3- oder 1,4-Cyclohexandimethanol, Bisphenol A, hydriertes Bisphenol A, 1,1,1-Trimethylolethan, 1,1,1-Trimethylolpropan, Glycerin oder Anilin, oder Mischungen der vorgenannten Verbindungen. Ebenfalls geeignet sind Polyetherpolyole mit darin dispergierten Polymerpartikeln, insbesondere solche mit Styrol-Acrylnitril-Partikeln (SAN) oder Polyharnstoff- bzw. Polyhydrazodicarbonamid-Partikeln (PHD).

Bevorzugte Polyetherpolyole sind Polyoxypropylendiole oder Polyoxypropylentriole, oder sogenannte Ethylenoxid-terminierte (EO-capped bzw. EO-tipped) Polyoxypropylendiole oder -triole. Letztere sind Polyoxyethylen-polyoxypropylen-Mischpolyole, die insbesondere dadurch erhalten werden, dass Polyoxypropylendiole oder-triole nach Abschluss der Polypropoxylierungsreaktion mit Ethylenoxid weiter alkoxyliert werden und dadurch primäre Hydroxylgruppen aufweisen.

Bevorzugte Polyetherpolyole weisen einen Ungesättigtheitsgrad von weniger als 0.02 mEq/g, insbesondere weniger als 0.01 mEq/g auf.
- Polyesterpolyole, auch Oligoesterole genannt, hergestellt nach bekannten Verfahren, insbesondere der Polykondensation von Hydroxycarbonsäuren bzw. Lactonen oder der Polykondensation von aliphatischen und/oder aromatischen Polycarbonsäuren mit zwei- oder mehrwertigen Alkoholen. Bevorzugt sind Polyesterdiole aus der Umsetzung von zweiwertigen Alkoholen wie insbesondere 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole, mit organischen Dicarbonsäuren oder deren Anhydride oder Ester, wie insbesondere Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure, 1,2-Cyclohexandicarbonsäure, 1,3-Cyclohexandicarbonsäure oder 1,4-Cyclohexandicarbonsäure oder Mischungen der vorgenannten Säuren, oder Polyesterpolyole aus Lactonen wie insbesondere ε-Caprolacton. Besonders bevorzugt sind Polyesterpolyole aus Adipinsäure oder Sebacinsäure oder Dodecandicarbonsäure und Hexandiol oder Neopentylglykol.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei OH-Gruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- oder Polymethacrylatpolyole.
- Polyhydroxyfunktionelle Fette oder Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie insbesondere polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen oder Isopren, insbesondere polyhydroxyfunktionelle Acrylonitril/ Butadien-Copolymere, wie sie insbesondere aus Epoxiden oder Aminoalkoholen und carboxylterminierten Acrylonitril/Butadien-Copolymeren (beispielsweise kommerziell erhältlich unter dem Namen Hypro^{®} CTBN oder CTBNX oder ETBN von Emerald Performance Materials) hergestellt werden können; oder hydrierte polyhydroxyfunktionelle Polymere oder Copolymere von Dienen.

Geeignet sind insbesondere auch Mischungen von Polyolen.

Bevorzugt sind Polyetherpolyole, Polyesterpolyole, Polycarbonatpolyole, Poly-(meth)acrylatpolyole oder Polybutadienpolyole.

Besonders bevorzugt sind Polyetherpolyole, Polyesterpolyole, insbesondere aliphatische Polyesterpolyole, oder Polycarbonatpolyole, insbesondere aliphatische Polycarbonatpolyole.

Insbesondere bevorzugt sind Polyetherpolyole, insbesondere Polyoxyalkylenpolyole.

Am meisten bevorzugt sind Polyoxypropylendi- oder -triole oder Ethylenoxid-terminierte Polyoxypropylendi- oder -triole.

Bevorzugt sind Polyole mit einem mittleren Molekulargewicht Mₙ im Bereich von 400 bis 20'000 g/mol, bevorzugt von 1'000 bis 15'000 g/mol.

Bevorzugt sind Polyole mit einer mittleren OH-Funktionalität im Bereich von 1.6 bis 3.

Bevorzugt sind bei Raumtemperatur flüssige Polyole.

Bei der Herstellung eines Isocyanatgruppen-haltigen Polymers können auch Anteile von zwei- oder mehrfunktionellen Alkoholen mitverwendet werden, insbesondere 1,2-Ethandiol, 1,2-Propandiol, 1,3-Propandiol, 2-Methyl-1,3-propandiol, 1,2-Butandiol, 1,3-Butandiol, 1,4-Butandiol, 1,3-Pentandiol, 1,5-Pentandiol, 3-Methyl-1,5-pentandiol, Neopentylglykol, Dibromneopentylglykol, 1,2-Hexandiol, 1,6-Hexandiol, 1,7-Heptandiol, 1,2-Octandiol, 1,8-Octandiol, 2-Ethyl-1,3-hexandiol, Diethylenglykol, Triethylenglykol, Dipropylenglykol, Tripropylenglykol, 1,3- oder 1,4-Cyclohexandimethanol, ethoxyliertes Bisphenol-A, propoxyliertes Bisphenol-A, Cyclohexandiol, hydriertes Bisphenol-A, Dimerfettsäurealkohole, 1,1,1-Trimethylolethan, 1,1,1-Trimethylolpropan, Glycerin, Pentaerythritol, Zuckeralkohole wie insbesondere Xylit, Sorbit oder Mannit oder Zucker wie insbesondere Saccharose oder alkoxylierte Derivate der genannten Alkohole oder Mischungen der genannten Alkohole.

Das Isocyanatgruppen-haltige Polymer weist bevorzugt ein mittleres Molekulargewicht Mₙ im Bereich von 1'500 bis 20'000 g/mol, insbesondere 2'000 bis 15'000 g/mol, auf.

Zusätzlich zu einem Isocyanatgruppen-haltigen Polymer kann die Zusammensetzung mindestens ein oligomeres Isocyanat oder eine bei Raumtemperatur flüssige Form von MDI enthalten.

Geeignete oligomere Isocyanate sind insbesondere HDI-Biurete wie Desmodur^{®} N 100 oder N 3200 (von Covestro AG), Tolonate^{®} HDB oder HDB-LV (von Venorex Holding SAS) oder Duranate^{®} 24A-100 (von Asahi Kasei Corp.); HDI-Isocyanurate wie Desmodur^{®} N 3300, N 3600 oder N 3790 BA (alle von Covestro AG), Tolonate^{®} HDT, HDT-LV oder HDT-LV2 (von Vencorex Holding SAS), Duranate^{®} TPA-100 oder THA-100 (von Asahi Kasei Corp.) oder Coronate^{®} HX (vonTosoh Corp.); HDI-Uretdione wie Desmodur^{®} N 3400 (von Covestro AG); HDI-Iminooxadiazindione wie Desmodur^{®} XP 2410 (von Covestro AG); HDI-Allophanate wie Desmodur^{®} VP LS 2102 (von Covestro AG); IPDI-Isocyanurate wie beispielsweise in Lösung als Desmodur^{®} Z 4470 (von Covestro AG) oder in fester Form als Vestanat^{®} T1890/ 100 (von Evonik Industries AG); TDI-Oligomere wie Desmodur^{®} IL (von Covestro AG); oder gemischte Isocyanurate auf Basis TDI/HDI wie Desmodur^{®} HL (von Covestro AG).

Eine bei Raumtemperatur flüssige Form von MDI stellt entweder durch partielle chemische Modifizierung - insbesondere Carbodiimidisierung bzw. Uretoniminbildung oder Adduktbildung mit Polyolen - verflüssigtes 4,4'-MDI dar, oder es ist ein durch Abmischen gezielt herbeigeführtes oder durch den Herstellungsprozess bedingtes Gemisch von 4,4'-MDI mit anderen MDI-Isomeren (2,4'-MDI und/oder 2,2'-MDI), und/oder MDI-Oligomeren und/oder MDI-Homologen (polymeres MDI oder PMDI).

Zusätzlich zu mindestens einem Polyisocyanat und/oder Isocyanatgruppen-haltigen Polymer kann die härtbare Zusammensetzung mindestens einen latenten Härter enthalten, insbesondere ein Enamin, Ketimin, Aldimine oder Oxazolidin, besonders bevorzugt ein Aldimin oder Oxazolidin, am meisten bevorzugt ein Di- oder Trialdimin.

In einer bevorzugten Ausführungsform stellt die härtbare Zusammensetzung eine einkomponentige Polyurethanzusammensetzung dar und enthält zusätzlich zum Polyether mit blockierten Aminogruppen mindestens ein Isocyanatgruppen-haltiges Polymer und gegebenenfalls mindestens einen latenten Härter.

In einer weiteren bevorzugten Ausführungsform stellt die härtbare Zusammensetzung eine zweikomponentige Polyurethanzusammensetzung dar und besteht aus einer ersten Komponente, welche mindestens ein Polyol enthält, und einer zweiten Komponente, welche mindestens ein Polyisocyanat und gegebenenfalls mindestens ein Isocyanatgruppen-haltiges Polymer enthält, wobei der Polyether mit blockierten Aminogruppen und gegebenenfalls mindestens ein latenter Härter jeweils in einer der beiden oder beiden Komponenten enthalten sind. Als Polyol geeignet sind insbesondere die als geeignet zur Herstellung eines Isocyanatgruppen-haltigen Polymers bereits genannten Polyole.

In einer weiteren bevorzugten Ausführungsform ist die härtbare Zusammensetzung eine silanmodifizierte Polymerzusammensetzung (SMP) und enthält mindestens ein Silangruppen-haltiges organisches Polymer.

Bevorzugt ist eine solche härtbare Zusammensetzung einkomponentig.

Das Silangruppen-haltige organische Polymer weist bevorzugt Silangruppen der Formel 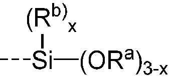 auf,
wobei
R^{a} für einen linearen oder verzweigten, einwertigen Kohlenwasserstoffrest mit 1 bis 5 C-Atomen, insbesondere für Methyl oder Ethyl, steht,
R^{b} für einen linearen oder verzweigten, einwertigen Kohlenwasserstoffrest mit 1 bis 8 C-Atomen, insbesondere für Methyl, steht, und
x für 0 oder 1 oder 2, bevorzugt für 0 oder 1, insbesondere für 0, steht.

Dabei weisen Methoxysilangruppen den Vorteil auf, dass sie besonders reaktiv sind. Ethoxysilangruppen weisen den Vorteil auf, dass sie toxikologisch vorteilhaft und besonders lagerstabil sind.

Besonders bevorzugt sind Trimethoxysilangruppen, Dimethoxymethylsilangruppen oder Triethoxysilangruppen.

Am meisten bevorzugt sind Trimethoxysilangruppen oder Triethoxysilangruppen.

Ein bevorzugtes Silangruppen-haltiges organisches Polymer ist ein Polyolefin oder ein Polyester oder ein Polyamid oder ein Poly(meth)acrylat oder ein Polyether oder eine Mischform dieser Polymere. Die Silangruppen können seitlich in der Kette oder endständig stehen und sind über ein C-Atom an das organische Polymer gebunden.

Besonders bevorzugt ist das Silangruppen-haltige organische Polymer ein Silangruppen-haltiger Polyether.

Als "Silangruppen-haltiger Polyether" werden organische Polymere enthaltend mindestens eine Silangruppe bezeichnet, deren Polymerkette hauptsächlich Polyether-Einheiten, insbesondere 1,2-Oxypropylen-Einheiten, aufweisen. Neben den Polyether-Einheiten können insbesondere auch Urethangruppen, Harnstoffgruppen, Thiourethangruppen, Estergruppen oder Amidgruppen enthalten sein.

Der Silangruppen-haltige Polyether enthält bevorzugt mindestens 50 Gewichts-%, insbesondere mindestens 70 Gewichts-%, besonders bevorzugt mindestens 80 Gewichts-%, 1,2-Oxypropylen-Einheiten.

Verfahren zur Herstellung von geeigneten Silangruppen-haltigen Polyethern sind dem Fachmann bekannt.

In einem bevorzugten Verfahren sind Silangruppen-haltige Polyether erhältlich aus der Umsetzung von Allylgruppen-haltigen Polyethern mit Hydrosilanen, gegebenenfalls unter Kettenverlängerung mit beispielsweise Diisocyanaten.

In einem weiteren bevorzugten Verfahren sind Silangruppen-haltige Polyether erhältlich aus der Copolymerisation von Alkylenoxiden und Epoxysilanen, gegebenenfalls unter Kettenverlängerung mit beispielsweise Diisocyanaten.

In einem weiteren bevorzugten Verfahren sind Silangruppen-haltige Polyether erhältlich aus der Umsetzung von Polyetherpolyolen mit Isocyanatosilanen, gegebenenfalls unter Kettenverlängerung mit Diisocyanaten.

In einem weiteren bevorzugten Verfahren sind Silangruppen-haltige Polyether erhältlich aus der Umsetzung von Isocyanatgruppen-haltigen Polyethern mit Aminosilanen, Hydroxysilanen oder Mercaptosilanen. Silangruppen-haltige Polyether aus diesem Verfahren sind besonders bevorzugt. Dieses Verfahren ermöglicht den Einsatz einer Vielzahl von kommerziell gut verfügbaren, kostengünstigen Ausgangsmaterialien, womit unterschiedliche Polymereigenschaften erhalten werden können, insbesondere eine hohe Dehnbarkeit, eine hohe Festigkeit, ein niedriges Elastizitätsmodul, ein tiefer Glasübergangspunkt oder eine hohe Witterungsbeständigkeit.

Besonders bevorzugt ist der Silangruppen-haltige Polyether erhältlich aus der Umsetzung von Isocyanatgruppen-haltigen Polyethern mit Aminosilanen und/oder Hydroxysilanen und/oder Mercaptosilanen.

Geeignete Isocyanatgruppen-haltige Polyether sind insbesondere erhältlich aus der Umsetzung von Polyetherpolyolen, insbesondere Polyoxyalkylendiolen oder Polyoxyalkylentriolen, bevorzugt Polyoxypropylendiolen oder Polyoxypropylen-triolen, mit einer überstöchiometrischen Menge an Polyisocyanaten, insbesondere Diisocyanaten.

Bevorzugt wird die Umsetzung zwischen dem Polyisocyanat und dem Polyetherpolyol unter Feuchtigkeitsausschluss bei einer Temperatur von 50°C bis 160°C durchgeführt, gegebenenfalls in Anwesenheit geeigneter Katalysatoren, wobei das Polyisocyanat so dosiert ist, dass dessen Isocyanatgruppen im Verhältnis zu den Hydroxylgruppen des Polyols im stöchiometrischen Überschuss vorhanden sind. Insbesondere wird der Überschuss an Polyisocyanat so gewählt, dass nach der Umsetzung aller Hydroxylgruppen ein Gehalt an freien Isocyanatgruppen von 0.1 bis 5 Gewichts-%, bevorzugt 0.2 bis 4 Gewichts-%, besonders bevorzugt 0.3 bis 3 Gewichts-%, bezogen auf das gesamte Polymer, verbleibt. Bevorzugte Diisocyanate sind die bereits vorgängig erwähnten. Besonders bevorzugt ist IPDI oder TDI. Meist bevorzugt ist IPDI. Damit werden Silangruppen-haltige Polyether mit besonders guter Lichtechtheit erhalten.

Speziell geeignet als Polyetherpolyole sind Polyoxypropylendiole mit einem Ungesättigtheitsgrad tiefer als 0.02 mEq/g, insbesondere tiefer als 0.01 mEq/g, und einem mittleren Molekulargewicht Mₙ im Bereich von 400 bis 25'000 g/mol, insbesondere 1'000 bis 20'000 g/mol.

Neben Polyetherpolyolen können anteilig auch andere Polyole eingesetzt werden, insbesondere Polyacrylatpolyole, sowie niedrigmolekulare Diole oder Triole.

Geeignete Aminosilane für die Umsetzung mit einem Isocyanatgruppen-haltigen Polyether sind primäre und insbesondere sekundäre Aminosilane. Bevorzugt sind 3-Aminopropyltrimethoxysilan, 3-Aminopropyldimethoxymethylsilan, 4-Aminobutyltrimethoxysilan, 4-Amino-3-methylbutyltrimethoxysilan, 4-Amino-3,3-dimethylbutyltrimethoxysilan, N-Butyl-3-aminopropyltrimethoxysilan, N-Phenyl-3-aminopropyltrimethoxysilan, Addukte aus primären Aminosilanen wie 3-Aminopropyltrimethoxysilan, 3-Aminopropyldimethoxymethylsilan oder N-(2-Aminoethyl)-3-aminopropyltrimethoxysilan und Michael-Akzeptoren wie Acrylnitril, (Meth)acrylsäureestern, (Meth)acrylsäureamiden, Maleinsäure- oder Fumarsäurediestern, Citraconsäurediestern oder Itaconsäurediestern, insbesondere N-(3-Trimethoxysilylpropyl)aminobernsteinsäuredimethyl- oder -diethylester. Ebenfalls geeignet sind Analoga der genannten Aminosilane mit Ethoxygruppen anstelle der Methoxygruppen am Silicium.

Geeignete Hydroxysilane für die Umsetzung mit einem Isocyanatgruppen-haltigen Polyether sind insbesondere erhältlich aus der Addition von Aminosilanen an Lactone oder an cyclische Carbonate oder an Lactide.

Bevorzugte Hydroxysilane, welche auf diese Weise erhalten werden, sind N-(3-Triethoxysilylpropyl)-2-hydroxypropanamid, N-(3-Trimethoxysilylpropyl)-2-hydroxypropanamid, N-(3-Triethoxysilylpropyl)-4-hydroxypentanamid, N-(3-Triethoxysilylpropyl)-4-hydroxyoctanamid, N-(3-Triethoxysilylpropyl)-5-hydroxydecanamid oder N-(3-Triethoxysilylpropyl)-2-hydroxypropylcarbamat.

Weiterhin geeignete Hydroxysilane sind erhältlich aus der Addition von Aminosilanen an Epoxide oder aus der Addition von Aminen an Epoxysilane. Bevorzugte Hydroxysilane, welche auf diese Weise erhalten werden, sind 2-Morpholino-4(5)-(2-trimethoxysilylethyl)cyclohexan-1-ol, 2-Morpholino-4(5)-(2-triethoxysilylethyl)cyclohexan-1-ol oder 1-Morpholino-3-(3-(triethoxysilyl)propoxy)propan-2-ol.

Geeignete Mercaptosilane für die Umsetzung mit einem Isocyanatgruppen-haltigen Polyether sind insbesondere 3-Mercaptopropyltrimethoxysilan oder 3-Mercaptopropyltriethoxysilan.

Als Silangruppen-haltige Polyether sind auch kommerziell erhältliche Produkte geeignet, insbesondere die Folgenden: MS Polymer^{™} (von Kaneka Corp.; insbesondere die Typen S203H, S303H, S227, S810, MA903 und S943); MS Polymer^{™} bzw. Silyl^{™} (von Kaneka Corp.; insbesondere die Typen SAT010, SAT030, SAT200, SAX350, SAX400, SAX725, MAX450, MAX951); Excestar^{®} (von Asahi Glass Co. Ltd.; insbesondere die Typen S2410, S2420, S3430, S3630); SPUR+* (von Momentive Performance Materials Inc.; insbesondere die Typen 1010LM, 1015LM, 1050MM); Vorasil^{™} (von DowDuPont Inc.; insbesondere die Typen 602 und 604); Desmoseal^{®} (von Covestro AG; insbesondere die Typen S XP 2458, S XP 2636, S XP 2749, S XP 2774 und S XP 2821), TEGOPAC^{®} (von Evonik Industries AG; insbesondere die Typen Seal 100, Bond 150, Bond 250), Polymer ST (von Hanse Chemie AG/Evonik Industries AG, insbesondere die Typen 47, 48, 61, 61LV, 77, 80, 81); Geniosil^{®} STP (von Wacker Chemie AG; insbesondere die Typen E10, E15, E30, E35).

Besonders bevorzugt wird der Silangruppen-haltige Polyether erhalten aus der Umsetzung von mindestens einem Isocyanatgruppen-haltigen Polyether mit mindestens einem Aminosilan und/oder Hydroxysilan und/oder Mercaptosilan.

Bevorzugt ist das Aminosilan und/oder Hydroxysilan und/oder Mercaptosilan dabei ausgewählt aus der Gruppe bestehend aus N-(3-Trimethoxysilylpropyl)-aminobernsteinsäuredimethylester, N-(3-Trimethoxysilylpropyl)aminobernsteinsäurediethylester, N-(3-Triethoxysilylpropyl)aminobernsteinsäuredimethylester, N-(3-Triethoxysilylpropyl)aminobernsteinsäurediethylester, N-(3-Trimethoxysilylpropyl)-2-hydroxypropanamid, N-(3-Triethoxysilylpropyl)-2-hydroxypropanamid, 3-Mercaptopropyltrimethoxysilan und 3-Mercaptopropyltriethoxysilan.

Die bevorzugten Ausführungsformen des Silangruppen-haltigen organischen Polymers ermöglichen Zusammensetzungen mit guter Lagerstabilität, schneller Aushärtung und besonders guten mechanischen Eigenschaften, insbesondere hoher Elastizität und Dehnbarkeit bei guter Festigkeit, und hoher Wärmebeständigkeit.

Bevorzugt enthält die härtbare Zusammensetzung zusätzlich einen oder mehrere weitere Bestandteile, insbesondere ausgewählt aus der Gruppe bestehend aus Füllstoffen, Haftvermittlern, Trocknungsmitteln, Verdickungsmitteln und Katalysatoren.

Als Füllstoff sind die bereits genannten Füllstoffe besonders geeignet.

Geeignete Haftvermittler sind insbesondere Aminosilane wie insbesondere 3-Aminopropyltrimethoxysilan, 3-Aminopropyldimethoxymethylsilan, N-(2-Aminoethyl)-3-aminopropyl-trimethoxysilan, N-(2-Aminoethyl)-3-aminopropyl-dimethoxymethylsilan, N-(2-Aminoethyl)-N'-[3-(trimethoxysilyl)propyl]ethylendiamin oder deren Analoga mit Ethoxy- anstelle von Methoxygruppen, weiterhin N-Phenyl-, N-Cyclohexyl- oder N-Alkylaminosilane, Mercaptosilane, Epoxysilane, (Meth)acrylo-silane, Anhydridosilane, Carbamatosilane, Alkylsilane oder Iminosilane, oligomere Formen dieser Silane, Addukte aus primären Aminosilanen mit Epoxysilanen oder (Meth)acrylosilanen oder Anhydridosilanen, aminofunktionelle Alkylsilsesquioxane, insbesondere aminofunktionelles Methylsilsesquioxan oder aminofunktionelles Propylsilsesquioxan, oder Titanate.

Für Isocyanatgruppen-haltige Zusammensetzung sind insbesondere Epoxysilane wie insbesondere 3-Glycidoxypropyltrimethoxysilan oder 3-Glycidoxypropyltriethoxysilan, (Meth)acrylosilane, Anhydridosilane, Carbamatosilane, Alkylsilane oder Iminosilane oder oligomere Formen dieser Silane als Haftvermittler geeignet.

Geeignete Trocknungsmittel für Zusammensetzungen mit Silangruppen-haltigen Polymeren sind insbesondere Tetraethoxysilan, Vinyltrimethoxysilan, Vinyltriethoxysilan oder Organoalkoxysilane, welche in α-Stellung zur Silangruppe eine funktionelle Gruppe aufweisen, insbesondere N-(Methyldimethoxysilylmethyl)-O-methylcarbamat, (Methacryloxymethyl)silane, Methoxymethylsilane, Orthoameisensäureester, Calciumoxid oder Molekularsiebpulver.

Geeignete Trocknungsmittel für Isocyanatgruppen-haltige Zusammensetzungen sind insbesondere Molekularsiebpulver, Calciumoxid, hochreaktive Isocyanate wie p-Tosylisocyanat, monomere Diisocyanate oder Orthoameisensäureester.

Geeignete Verdickungsmittel sind insbesondere Harnstoffe, Schichtsilikate wie Bentonite, Derivate von Ricinusöl, hydriertes Ricinusöl, Polyamide, Polyurethane oder pyrogene Kieselsäuren.

Ein bevorzugtes Verdickungsmittel ist eine bei Raumtemperatur streichfähige Paste enthaltend 10 bis 25 Gewichts-% Harnstoffverbindungen und 75 bis 90 Gewichts-% der vorgängig beschriebenen Polyether mit blockierten Hydroxylgruppen. Eine solche Paste wird insbesondere hergestellt, indem ein Diisocyanat, insbesondere 4,4'-Diphenylmethandiisocyanat, und ein Monoamin, insbesondere n-Butylamin, im Polyether mit blockierten Hydroxylgruppen umgesetzt wird.

Geeignete Katalysatoren sind Katalysatoren für die Vernetzung von Silangruppen, insbesondere Metallkatalysatoren wie insbesondere Verbindungen von Zinn, Titan, Zirkonium, Aluminium oder Zink, und/oder stickstoffhaltige Verbindungen. Bevorzugt sind Diorganozinn(IV)-Verbindungen wie insbesondere Dibutylzinn-(IV)diacetat, Dibutylzinn(IV)dilaurat, Dibutylzinn(IV)dineodecanoat, Dibutylzinn-(IV)bis(acetylacetonat) oder Dioctylzinn(IV)dilaurat, weiterhin Titan(IV)- oder Zirkonium(IV)- oder Aluminium(III)- oder Zink(II)-Komplexe mit insbesondere Alkoxy-, Carboxylat-, 1,3-Diketonat-, 1,3-Ketoesterat- oder 1,3-Ketoamidat-Liganden, insbesondere Organotitanate, weiterhin Amine, Amidine wie insbesondere 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]undec-7-en, 6-Dibutylamino-1,8-diazabicyclo[5.4.0]undec-7-en, N,N'-Di-n-hexylacetamidin (DHA), 2-Methyl-1,4,5,6-tetra-hydropyrimidin, 1,2-Dimethyl-1,4,5,6-tetrahydropyrimidin, 2,5,5-Trimethyl-1,4,5,6-tetrahydropyrimidin, N-(3-Trimethoxysilylpropyl)-4,5-dihydroimidazol, N-(3-Triethoxysilylpropyl)-4,5-dihydroimidazol, 1-(3-Dimethylaminopropyl)-2-methyl-1,4,5,6-tetrahydropyrimidin, 1-(3-Aminopropyl)-2-methyl-1,4,5,6-tetrahydropyrimidin oder Umsetzungsprodukte davon, oder Guanidine wie insbesondere 1-Butylguanidin, 1,1-Dimethylguanidin, 1,3-Dimethylguanidin, 1,1,3,3-Tetramethylguanidin (TMG), 2-(3-(Trimethoxysilyl)propyl)-1,1,3,3-tetramethylguanidin, 2-(3-(Methyldimethoxysilyl)propyl)-1,1,3,3-tetramethylguanidin, 2-(3-(Triethoxysilyl)propyl)-1,1,3,3-tetramethylguanidin, 1,5,7-Triazabicyclo[4.4.0]dec-5-en (TBD), 7-Methyl-1,5,7-triazabicyclo[4.4.0]dec-5-en, 7-Cyclohexyl-1,5,7-triazabicyclo[4.4.0]dec-5-en, 1-Phenylguanidin, 1-(o-Tolyl)guanidin (OTG), 1,3-Diphenylguanidin, 1,3-Di(o-tolyl)guanidin, 2-Guanidinobenzimidazol oder Guanidine aus der Umsetzung von Monoaminen, Polyaminen oder Aminosilanen mit Carbodiimiden, insbesondere Dicyclohexylcarbodiimid oder Diisopropylcarbodiimid, sowie Biguanide oder Imidazole.

Bevorzugt sind Organotitanate, insbesondere Bis(ethylacetoacetato)diisobutoxytitan(IV) (kommerziell erhältlich beispielsweise als Tyzor^{®} IBAY von Dorf Ketal), Bis(ethylacetoacetato)diisopropoxytitan(IV) (kommerziell erhältlich beispielsweise als Tyzor^{®} DC von Dorf Ketal), Bis(acetylacetonato)diisopropoxytitan(IV), Bis-(acetylacetonato)diisobutoxytitan(IV), Tris(oxyethyl)aminisopropoxytitan(IV), Bis-[tris(oxyethyl)amin]diisopropoxytitan(IV), Bis(2-ethylhexan-1,3-dioxy)titan(IV), Tris[2-((2-aminoethyl)amino)ethoxy]ethoxytitan(IV), Bis(neopentyl(diallyl)oxy)-diethoxytitan(!V), Tetra(isopropoxy)titanat, Tetra(n-butoxy)titanat, Tetra(2-ethylhexyloxy)titanat oder Polybutyltitanat, insbesondere Bis(ethylacetoacetato)-diisobutoxy-titan(IV) oder Bis(ethylacetoacetato)diisopropoxy-titan(IV).

Weiterhin bevorzugt sind Amidine oder Guanidine, insbesondere DBU, 1-(3-Dimethylaminopropyl)-2-methyl-1,4,5,6-tetrahydropyrimidin, 1-(3-Aminopropyl)-2-methyl-1,4,5,6-tetrahydropyrimidin oder Umsetzungsprodukte davon, oder Guanidine aus der Umsetzung von Monoaminen, Polyaminen oder Aminosilanen mit Dicyclohexylcarbodiimid oder Diisopropylcarbodiimid.

Weiterhin bevorzugt sind Kombinationen dieser Katalysatoren, insbesondere Kombinationen aus mindestens einem Organotitanat und mindestens einem Amidin oder Guanidin.

Geeignete Katalysatoren sind weiterhin Katalysatoren für die Beschleunigung der Reaktion von Isocyanatgruppen, insbesondere Organozinn(IV)-Verbindungen wie insbesondere Dibutylzinndiacetat, Dibutylzinndilaurat, Dibutylzinndichlorid, Dibutylzinndiacetylacetonat, Dimethylzinndilaurat, Dioctylzinndiacetat, Dioctylzinndilaurat oder Dioctylzinndiacetylacetonat, Komplexverbindungen von Bismut(III) oder Zirkonium(IV), insbesondere mit Liganden ausgewählt aus Alkoholaten, Carboxylaten, 1,3-Diketonaten, Oxinat, 1,3-Ketoesteraten und 1,3-Ketoamidaten, oder tertiäre Aminogruppen enthaltende Verbindungen wie insbesondere 2,2'-Dimorpholinodiethylether (DMDEE).

Geeignete Katalysatoren sind weiterhin Katalysatoren für die Hydrolyse von latenten Härtern, insbesondere Carbonsäuren wie 2-Ethylhexansäure, Laurinsäure, Stearinsäure, Neodecansäure, Benzoesäure, Salicylsäure oder 2-Nitrobenzoesäure, organische Carbonsäureanhydride, Silylester von Carbonsäuren, organische Sulfonsäuren, Sulfonsäureester, andere organische oder anorganische Säuren oder Mischungen der vorgenannten Säuren oder Säureester. Bevorzugt sind aromatische Carbonsäuren wie Benzoesäure, 2-Nitrobenzoesäure oder insbesondere Salicylsäure.

Die härtbare Zusammensetzung kann weitere Zusätze enthalten, insbesondere die bereits genannten, sowie weiterhin
- weitere Katalysatoren, welche die Reaktion der Isocyanatgruppen und/oder Silangruppen beschleunigen, insbesondere Salze, Seifen oder Komplexe von Zinn(II), Eisen, Aluminium, Molybdän, Dioxomolybdän oder Kalium, insbesondere Aluminiumlactat, Aluminiumoleat oder Kaliumacetat; tertiäre Aminogruppen enthaltende Verbindungen, insbesondere N-Ethyldiisopropylamin, N,N,N',N'-Tetramethylalkylendiamine, Pentamethylalkylentriamine und höhere Homologe davon, Bis-(N,N-diethylaminoethyl)adipat, Tris(3-dimethylaminopropyl)amin, 1,4-Diazabicyclo[2.2.2]octan (DABCO), N-Alkylmorpholine, N,N'-Dimethylpiperazin; stickstoffaromatische Verbindungen wie 4-Dimethylaminopyridin, N-Methylimidazol, N-Vinylimidazol oder 1,2-Dimethylimidazol; organische Ammoniumverbindungen wie Benzyltrimethylammoniumhydroxid oder alkoxylierte tertiäre Amine; sowie sogenannte "delayed action"-Katalysatoren, welche Modifizierungen bekannter Metall- oder Aminkatalysatoren darstellen;
- Rheologie-Modifizierer, insbesondere Harnstoffverbindungen, Schichtsilikate wie Bentonite, Derivate von Ricinusöl, hydriertes Ricinusöl, Polyamide, Polyurethane, pyrogene Kieselsäuren, Celluloseether oder hydrophob modifizierte Polyoxyethylene; oder
- Additive, insbesondere Netzmittel, Verlaufmittel, Entschäumer, Entlüfter, Stabilisatoren gegen Oxidation, Wärme, Licht oder UV-Strahlung oder Biozide;
oder weitere üblicherweise in härtbaren Zusammensetzungen eingesetzte Substanzen.

Es kann sinnvoll sein, gewisse Substanzen vor dem Einmischen in die Zusammensetzung chemisch oder physikalisch zu trocknen.

Eine bevorzugte härtbare Zusammensetzung umfasst
- 20 bis 80 Gewichts-% eines Isocyanat- und/oder Silangruppen-haltigen Polymers, oder - im Fall einer zweikomponentigen Polyurethanzusammensetzung
   - der Summe aus Polyolen, Aminen, latenten Härtern, Polyisocyanaten und Isocyantgruppen-haltigen Polymeren,
- 10 bis 60 Gewichts-% Füllstoffe, und
- 5 bis 40 Gewichts-% Polyether mit blockierten Hydroxylgruppen.

Die härtbare Zusammensetzung wird insbesondere unter Ausschluss von Feuchtigkeit hergestellt und bei Umgebungstemperatur in feuchtigkeitsdichten Gebinden aufbewahrt. Ein geeignetes feuchtigkeitsdichtes Gebinde besteht insbesondere aus einem gegebenenfalls beschichteten Metall und/oder Kunststoff und ist insbesondere ein Fass, ein Container, ein Hobbock, ein Eimer, ein Kanister, eine Büchse, ein Beutel, ein Schlauchbeutel, eine Kartusche oder eine Tube.

Die härtbare Zusammensetzung kann so formuliert sein, dass sie eine pastöse Konsistenz mit hoher Fliessgrenze aufweist, insbesondere für die Verwendung als Klebstoff oder Dichtstoff. Eine solche Zusammensetzung kann aufgespachtelt oder mittels einer geeigneten Vorrichtung unter Druck appliziert werden, beispielsweise mittels einer Kartuschenpistole oder einer Fasspumpe oder einem Applikationsroboter, wobei die Zusammensetzung insbesondere in Form einer Raupe mit einer im Wesentlichen runden oder dreieckigen Querschnittsfläche ausgetragen wird.

Die härtbare Zusammensetzung kann weiterhin so formuliert sein, dass sie flüssig und sogenannt selbstverlaufend oder nur leicht thixotrop ist, insbesondere für die Verwendung als Dichtmasse oder Beschichtung. Eine solche Zusammensetzung kann zur Applikation ausgegossen oder gespachtelt werden. Als Beschichtung kann sie anschliessend flächig bis zur gewünschten Schichtdicke verteilt werden, beispielsweise mittels einer Rolle, Rakel, Zahntraufel oder einem Gummiwischer. In einem Arbeitsgang wird typischerweise eine Schichtdicke im Bereich von 0.5 bis 5 mm, insbesondere 1 bis 3 mm, aufgetragen.

Bei der Applikation der härtbaren Zusammensetzung beginnt der Prozess der Aushärtung, wobei die beschriebene Elastomer-Zusammensetzung entsteht.

Im Fall einer einkomponentigen feuchtigkeitshärtenden Zusammensetzung wird diese als solche appliziert und beginnt darauf unter dem Einfluss von Feuchtigkeit bzw. Wasser auszuhärten. Zur Beschleunigung der Aushärtung kann der Zusammensetzung bei der Applikation eine Beschleuniger-Komponente, welche Wasser und/oder einen Katalysator enthält oder freisetzt, zugemischt werden, oder die Zusammensetzung kann nach ihrer Applikation mit einer solchen Beschleuniger-Komponente in Kontakt gebracht werden.

Im Fall einer zweikomponentigen Zusammensetzung wird diese nach dem Vermischen der beiden Komponenten appliziert und beginnt dabei durch interne Reaktion auszuhärten, wobei die Aushärtung gegebenenfalls durch die Einwirkung von externer Feuchtigkeit vervollständigt wird. Das Vermischen der beiden Komponenten kann kontinuierlich oder batchweise mit dynamischen Mischern oder Statikmischern erfolgen.

Bei der Aushärtung reagieren vorhandene Isocyanatgruppen unter dem Einfluss von Feuchtigkeit miteinander und/oder mit gegebenenfalls in der Zusammensetzung vorhandenen weiteren Reaktivgruppen, insbesondere Hydroxylgruppen oder Aminogruppen. Weiterhin reagieren vorhandene Isocyanatgruppen mit hydrolysierenden Reaktivgruppen von gegebenenfalls vorhandenen latenten Härter. Vorhandene Silangruppen reagieren bei der Aushärtung unter dem Einfluss von Feuchtigkeit miteinander. Sie können bei Kontakt mit Feuchtigkeit zu Silanolgruppen (Si-OH-Gruppen) hydrolysieren. Vorhandene Silangruppen können mit vorhandenen Silanolgruppen zu Siloxangruppen (Si-O-Si-Gruppen) kondensieren. Als Ergebnis dieser Reaktionen härtet die Zusammensetzung aus und baut Haftung zum thermoplatsischen Kunststoff-Substrat auf, wobei der erfindungsgemässe Haftverbund erhalten wird.

Die zur Aushärtung einer feuchtigkeitshärtenden Zusammensetzung benötigte Feuchtigkeit gelangt bevorzugt aus der Luft (Luftfeuchtigkeit) durch Diffusion in die Zusammensetzung. Dabei bildet sich an den mit Luft in Kontakt stehenden Oberflächen der Zusammensetzung eine feste Schicht ausgehärteter Zusammensetzung (Haut). Die Aushärtung setzt sich entlang der Diffusionsrichtung von aussen nach innen fort, wobei die Haut zunehmend dicker wird und schliesslich die ganze applizierte Zusammensetzung umfasst. Die Feuchtigkeit kann zusätzlich oder vollständig auch aus einem oder mehreren Substrat(en), auf welche(s) die Zusammensetzung appliziert wurde, in die Zusammensetzung gelangen und/oder aus einer Beschleuniger-Komponente stammen, welche der Zusammensetzung bei der Applikation zugemischt oder nach der Applikation mit dieser in Kontakt gebracht wird, beispielsweise durch Bestreichen oder Besprühen.

Der erfindungsgemässe Haftverbund stellt bevorzugt eine Verklebung oder eine Abdichtung oder eine Beschichtung dar.

Für den Fall, dass der Haftverbund eine Verklebung oder Abdichtung darstellt, ist die Elastomer-Zusammensetzung typischerweise zwischen zwei oder mehreren Substraten angeordnet, an welche sie anhaftet. Mindestens eines der Substrate ist dabei das thermoplastische Kunststoff-Substrat. Als weiteres Substrat kann das gleiche thermoplastische Kunststoff-Substrat vorhanden sein, oder es kann ein anderes thermoplastisches Kunststoff-Substrat vorhanden sein, oder es kann ein beliebiges anderes Substrat vorhanden sein.

Als weiteres Substrat geeignet ist
- Glas, Glaskeramik, Beton, Mörtel, Faserzement, insbesondere Faserzement-Platten, Backstein, Ziegel, Gips, insbesondere Gips-Platten, oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Kupfer, Eisen, Stahl, Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen wie Phenol-, Melamin- oder Epoxidharzen gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Isolierschäume, insbesondere aus EPS, XPS, PUR, PIR, Steinwolle, Glaswolle oder geschäumtem Glas (Foamglas);
- beschichtete oder lackierte Substrate, insbesondere lackierte Fliesen, gestrichener Beton, pulverbeschichtete Metalle oder Legierungen oder lackierte Bleche;
- Farben oder Lacke.

Die Substrate können bei Bedarf vor dem Applizieren vorbehandelt werden, insbesondere durch physikalische und/oder chemische Reinigungsverfahren oder das Aufbringen eines Aktivators oder eines Primers.

Der erfindungsgemässe Haftverbund ist insbesondere Teil eines Artikels, welcher mit der Elastomer-Zusammensetzung verklebt oder abgedichtet oder beschichtet ist. Dieser Artikel kann ein Bauwerk des Hoch- oder Tiefbaus oder ein Teil davon sein, oder er kann ein industrielles Gut oder ein Konsumgut sein, insbesondere ein Fenster, ein Rohr, eine Haushaltmaschine oder ein Transportmittel wie insbesondere ein Automobil, ein Bus, ein Lastkraftwagen, ein Schienenfahrzeug, ein Schiff, ein Flugzeug oder ein Helikopter, oder ein Anbauteil davon.

Mit dem erfindungsgemässen Haftverbund gelingt es, auch ausgeprägt zur Bildung von Spannungsrissen neigende Kunststoffe, wie insbesondere Polycarbonat, im Wesentlichen ohne Spannungsrissbildung und damit zuverlässig und dauerhaft mit der Elastomer-Zusammensetzung zu verbinden. Dies wird insbesondere durch den in der Elastomer-Zusammensetzung enthaltenen Polyether mit blockierten Hydroxylgruppen ermöglicht, welcher die Lagerstabilität der unausgehärteten Elastomer-Zusammensetzung nicht beeinträchtigt und diese gut verdünnt, so dass sie gut applizierbar ist, und in der Elastomer-Zusammensetzung eine hohe elastifizierende Wirkung zeigt und somit ausgeprägt elastische Eigenschaften der Zusammensetzung ermöglicht, wie das beim Verkleben von thermoplastischen Kunststoffen typischerweise benötigt wird.

Ein weiterer Gegenstand der Erfindung ist die Verwendung einer härtbaren Zusammensetzung umfassend mindestens ein Isocyanatgruppen- und/oder Silangruppen-haltiges Polymer und mindestens einen Polyether mit blockierten Hydroxylgruppen, wie vorgängig beschrieben, zum Verkleben, Abdichten oder Beschichten von mindestens einem thermoplastischen Kunststoff-Substrat, wie vorgängig beschrieben.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

### Herstellung von Polyethern mit blockierten Hydroxylgruppen:

Die **Viskosität** wurde mit einem thermostatisierten Kegel-Platten-Viskosimeter Rheotec RC30 (Kegeldurchmesser 25 mm, Kegelwinkel 1°, Kegelspitze-Platten-Abstand 0.05 mm, Scherrate 10 s⁻¹) gemessen.

**Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen. Die Absorptionsbanden sind in Wellenzahlen (cm⁻¹) angegeben.

**¹H-NMR-Spektren** wurden auf einem Spektrometer des Typs Bruker Ascend 400 bei 400.14 MHz gemessen; die chemischen Verschiebungen δ sind angegeben in ppm relativ zu Tetramethylsilan (TMS). Echte und Pseudo-Kopplungsmuster wurden nicht unterschieden.

### Polyether-1: n-Butanol-gestartetes acetyliertes PPG-Monol mit mittlerem Molekulargewicht ca. 800 g/mol

120.00 g n-Butanol-gestartetes Polyoxypropylen-Monol (Synalox^{®} 100-20B, mittleres Molekulargewicht ca. 750 g/mol; vonDowDuPont Inc.) und 18.74 g Essigsäureanhydrid wurden in einem Rundkolben mit Destillieraufsatz unter Stickstoffatmosphäre vorgelegt. Dann wurde die Reaktionsmischung bei 130°C unter leichtem Stickstoffstrom gerührt, wobei als Destillat Essigsäure aufgefangen wurde. Anschliessend wurden bei 80°C und 10 mbar Vakuum die flüchtigen Bestandteile aus der Reaktionsmischung entfernt. Es wurde eine klare, farblose Flüssigkeit mit einer Viskosität von 75 mPa s bei 20°C erhalten.

FT-IR: 2970, 2931, 2867, 1738, 1454, 1372, 1345, 1296, 1241, 1098, 1014, 959, 925, 866, 827.

¹H-NMR (CDCl₃): 5.02 (hept., 1 H, CH₂(CH₃)C*H*-OAc), 3.75 - 3.34 (2 x m, ca. 39 H, OC*H*₂C*H*(CH₃)O), 3.33 - 3.28 (m, 2 H, CH₃CH₂CH₂C*H*₂O), 2.04 (s, 3 H, O(CO)C*H*₃), 1.55 (quint., 2 H, CH₃CH₂C*H*₂CH₂O), 1.36 (sext., 2 H, CH₃C*H*₂CH₂CH₂O), 1.22 (d, 3 H, CH₂(C*H*₃)CH-OAc), 1.17 - 1.10 (m, ca. 36 H, OCH₂CH(C*H*₃)O), 0.91 (t, 3 H, C*H*₃CH₂CH₂CH₂O).

### Polyether-2: Diacetyliertes PPG-Diol mit mittlerem Molekulargewicht ca. 1'100 g/mol

80.00 g Polyoxypropylen-Diol (Voranol ^{®} P 1010, OH-Zahl 110 mg KOH/g; von DowDuPont Inc.) und 18.74 g Essigsäureanhydrid wurden wie für **Polyether-1** beschrieben umgesetzt. Es wurde eine klare, farblose Flüssigkeit mit einer Viskosität von 145 mPa·s bei 20 °C erhalten.

### Polyether-3: Diacetyliertes PPG-Diol mit mittlerem Molekulargewicht ca. 2'100 g/mol

160.00 g Polyoxypropylen-Diol (Voranol ^{®} 2000 L, OH-Zahl 56 mg KOH/g; von DowDuPont Inc.) und 18.74 g Essigsäureanhydrid wurden wie für **Polyether-1** beschrieben umgesetzt. Es wurde eine klare, farblose Flüssigkeit mit einer Viskosität von 400 mPa·s bei 20 °C erhalten.

### Polyether-4: Diacetyliertes PPG-Diol mit mittlerem Molekulargewicht ca. 4'100 g/mol

600.0 g Polyoxypropylen-Diol (Acclaim^{®} 4200, OH-Zahl 28 mg KOH/g; von Covestro AG) und 33.7 g Essigsäureanhydrid wurden wie für **Polyether-1** beschrieben umgesetzt. Es wurde eine klare, farblose Flüssigkeit mit einer Viskosität von 1'150 mPa·s bei 20 °C erhalten.

### Polyether-5: Diacetyliertes PPG-Diol mit mittlerem Molekulargewicht ca. 8'100 g/mol

600.0 g Polyoxypropylen-Diol (Acclaim^{®} 8200, OH-Zahl 14 mg KOH/g; von Covestro AG) und 16.8 g Essigsäureanhydrid wurden wie für **Polyether-1** beschrieben umgesetzt. Es wurde eine klare, farblose Flüssigkeit mit einer Viskosität von 3'800 mPa·s bei 20°C erhalten.

### Polyether-6: PPG-Diol mit zwei p-Toluolsulfonylurethan-Endgruppen und mittlerem Molekulargewicht ca. 12'400 g/mol

600.0 g Polyoxypropylen-Diol (Acclaim^{®} 12200, von Covestro AG; mittleres Molekulargewicht ca. 12'000 g/mol) und 13.5 g p-Toluolsulfonylisocyanat wurden in einem Rundkolben mit Destillieraufsatz unter Stickstoffatmosphäre vorgelegt. Dann wurde die Reaktionsmischung bei 130°C unter leichtem Stickstoffstrom während 3 Stunden gerührt. Anschliessend wurden bei 80°C und 10 mbar Vakuum die flüchtigen Bestandteile aus der Reaktionsmischung entfernt. Es wurde eine klare, farblose Flüssigkeit mit einer Viskosität von 12'700 mPa·s bei 20°C erhalten.

### verwendete kommerzielle Substanzen:

| | |
|---|---|
| DINP: | Diisononylphthalat (Palatinol^{®} N, von BASF SE) |
| DIDP: | Diisodecylphthalat (Palatinol^{®} 10-P, von BASF SE) |
| DINCH: | Diisononyl-1 ,2-cyclohexandicarboxylat (Hexamoll^{®} DINCH, von BASF SE) |
| DOA: | Di(2-ethylhexyl)adipat (Adimoll^{®} DO, von Lanxess AG) |
| ATBC: | Acetyltributylcitrat |
| FAE: | aliphatischer Fettsäureester (Sovermol^{®} 1058, von BASF SE) |
| Kreide: | Omyacarb^{®} 5-GU (von Omya AG) |
| Russ: pyrogene | Monarch^{®} 570 (von Cabot Corp.) |
| Kieselsäure: | Aerosil^{®} R 972 (von Evonik Industries AG) |
| DMDEE | 2,2'-Dimorpholinodiethylether |
| pTSI | p-Toluolsulfonylisocyanat |

### Herstellung von Isocyanatgruppen-haltigen Polymeren:

### Polymer P1:

727.0 g Polyoxypropylendiol (Acclaim^{®} 4200, von Covestro AG; OH-Zahl 28.5 mg KOH/g) und 273.0 g 4,4'-Diphenylmethandiisocyanat (Desmodur^{®} 44 MC L, von Covestro AG) wurden nach bekanntem Verfahren bei 80°C zu einem Polymer mit einem Isocyanatgruppen-Gehalt von 7.6 Gewichts-%, einer Viskosität von 5.2 Pa s bei 20°C und einem Gehalt an monomerem 4,4'-Diphenylmethandiisocyanat von ca. 18 Gewichts-% umgesetzt. Anschliessend wurden die flüchtigen Bestandteile, insbesondere ein Grossteil des monomeren 4,4'-Diphenylmethandiisocyanats, in einem Kurzwegverdampfer destillativ entfernt (Manteltemperatur 180°C, Druck 0.1 bis 0.005 mbar, Kondensationstemperatur 47°C). Das so erhaltene Polymer wies einen Isocyanatgruppen-Gehalt von 1.8 Gewichts-%, eine Viskosität von 15.2 Pa s bei 20°C und einen Gehalt an monomerem 4,4'-Diphenylmethandiisocyanat von 0.08 Gewichts-% auf.

### Polymer P2:

725.0 g Ethylenoxid-terminiertes Polyoxypropylentriol (Desmophen^{®} 5031 BT, von Covestro AG; OH-Zahl 28 mg KOH/g) und 275 g 4,4'-Diphenylmethandiisocyanat (Desmodur^{®} 44 MC L, von Covestro AG) wurden nach bekanntem Verfahren bei 80°C zu einem Polymer mit einem Isocyanatgruppen-Gehalt von 7.6 Gewichts-%, einer Viskosität von 6.5 Pa s bei 20°C und einem Gehalt an monomerem 4,4'-Diphenylmethandiisocyanat von ca. 20 Gewichts-% umgesetzt. Anschliessend wurden die flüchtigen Bestandteile, insbesondere ein Grossteil des monomeren 4,4'-Diphenylmethandiisocyanats, in einem Kurzwegverdampfer destillativ entfernt (Manteltemperatur 180°C, Druck 0.1 bis 0.005 mbar, Kondensationstemperatur 47°C). Das so erhaltene Polymer wies einen Isocyanatgruppen-Gehalt von 1.7 Gewichts-%, eine Viskosität von 19 Pa s bei 20°C und einen Gehalt an monomerem 4,4'-Diphenylmethandiisocyanat von 0.04 Gewichts-% auf.

### Polymer P3:

724.0 g Polyoxypropylentriol (Acclaim^{®} 6300, von Covestro AG; OH-Zahl 28 mg KOH/g) und 276.0 g 4,4'-Diphenylmethandiisocyanat (Desmodur^{®} 44 MC L, von Covestro AG) wurden nach bekanntem Verfahren bei 80°C zu einem Polymer mit einem Isocyanatgruppen-Gehalt von 7.5 Gewichts-%, einer Viskosität von 9.9 Pa s bei 20°C und einem Gehalt an monomerem 4,4'-Diphenylmethandiisocyanat von ca. 20 Gewichts-% umgesetzt. Anschliessend wurden die flüchtigen Bestandteile, insbesondere ein Grossteil des monomeren 4,4'-Diphenylmethandiisocyanats, in einem Kurzwegverdampfer destillativ entfernt (Manteltemperatur 180°C, Druck 0.1 bis 0.005 mbar, Kondensationstemperatur 47°C). Das so erhaltene Polymer wies einen Isocyanatgruppen-Gehalt von 1.7 Gewichts-%, eine Viskosität von 34.7 Pa s bei 20°C und einen Gehalt an monomerem 4,4'-Diphenylmethandiisocyanat von 0.06 Gewichts-% auf.

### Herstellung von härtbaren Zusammensetzungen und Haftverbunden mit Polycarbonat:

### Zusammensetzungen Z1 bis Z12 (zweikomponentig)

Für jedes Beispiel wurde als **erste Komponente** ("Komponente-1") die in den Tabellen 1 und 2 angegebene kommerzielle A-Komponente (**SikaForce^{®}-7777 L05,** struktureller 2K PUR Klebstoff mit A-Komponente auf Polyol-Basis, gefüllt, grau; oder **SikaForce^{®}-7584,** flexibler 2K PUR Klebstoff mit A-Komponente auf Polyol-Basis, gefüllt, schwarz; beide von Sika Schweiz AG) eingesetzt.

Als **zweite Komponente** ("Komponente-2") wurden Mischungen aus 80 Gewichtsteilen Adiprene^{®} LFM E730 (MDI-terminiertes, difunktionelles, Polyetherbasiertes Polyurethanpolymer mit NCO-Gehalt 7.35 Gewichts-% und geringem Gehalt an monomerem MDI, von Lanxess AG) und 20 Gewichtsteilen des jeweiligen in den Tabellen 1 und 2 angegebenen Weichmachers eingesetzt, wobei die Mischungen mittels eines Zentrifugalmischers (SpeedMixer^{™} DAC 150, FlackTek Inc.) unter Feuchtigkeitsausschluss hergestellt und aufbewahrt wurden. Die beiden Komponenten wurden mittels des Zentrifugalmischers im in den Tabellen 1 und 2 angegebenen Mischungsverhältnis unter Feuchtigkeitsausschluss zu einer homogenen Paste verarbeitet und diese unverzüglich folgendermassen verwendet bzw. geprüft:
Von jeder Zusammensetzung wurden mehrere Haftverbunde mit Polycarbonat hergestellt. Dazu wurde die Paste jeweils auf eine mit Isopropanol entfettete Platte aus Polycarbonat ***PC1*** (=Makrolon^{®} GP Clear 099, von Covestro AG) der Grösse 150 x 30 x 2 mm in der Mitte auf einer Fläche von 30 x 30 mm in einer Schichtdicke von 2 mm aufgebracht und während 7 Tagen im Normklima gelagert bzw. ausgehärtet. Mehrere solche Haftverbunde wurden dann quer über ein auf einem Brett angebrachtes Rundholz mit einem Durchmesser von 35 mm gespannt und an den Enden so befestigt, dass jeder Haftverbund in gebogener Stellung fixiert war. Diese Anordnung wurde 24 h oder 7 Tage in einem Umluftofen bei 80°C gelagert und anschliessend nach einer Konditionierung von 24 h im Normklima optisch daraufhin beurteilt, wie stark die Platte im gebogenen Zustand verharrte und ob im Polycarbonat Spannungsrisse sichtbar waren. Die Resultate sind in den Tabellen 1 und 2 angegeben als "**Biegung *PC1***" bzw. "**Crazing *PC1***"***.***

Für das Crazing bedeuten
0: keine Risse
1: wenige oberflächliche kurze Risse an den Rändern der Zusammensetzung
2: einige oberflächliche kurze Risse an den Rändern der Zusammensetzung
3: einige tiefere Risse über die ganze Breite der Platte
4: viele tiefere Risse über die ganze Breite der Platte
5: sehr viele tiefere Risse über die ganze Breite der Platte

Mit "(Ref.)" bezeichnete Zusammensetzungen sind Vergleichsbeispiele.

**Tabelle 1: Zusammensetzung (in Gewichtsteilen) von Z1 bis Z6 und Eigenschaften der Haftverbunde damit. "s.stark" steht für "sehr stark"**

| **Zusammensetzung** | | | **Z1** | **Z2 (Ref.)** | **Z3 (Ref.)** | **Z4 (Ref.)** | **Z5 (Ref.)** | **Z6 (Ref.)** |
|---|---|---|---|---|---|---|---|---|
| **Komponente-1:** | | | 100.0 | 100.0 | 100.0 | 100.0 | 100.0 | 100.0 |
| | SikaForce^{®}-7584, A-Komponente | | | | | | | |
| **Komponente-2:** | | | 80.0 | 80.0 | 80.0 | 80.0 | 80.0 | 80.0 |
| | Adiprene^{®} LFM E730 | | | | | | | |
| Weichmacher | | | **Polyether-1** 20.0 | **DINP** 20.0 | **DINCH** 20.0 | **DOA** 20.0 | **ATBC** 20.0 | **FAE** 20.0 |
| Mischungsverhältnis¹ | | | 100/126 | 100/126 | 100/126 | 100/126 | 100/126 | 100/126 |
| Biegung ***PC1*** | | 1d 80°C | schwach | mittel | mittel | stark | mittel | stark |
| | | 7d 80°C | schwach | mittel | mittel | s.stark | mittel | s.stark |
| Crazing ***PC1*** | | 1d 80°C | 1 | 4 | 4 | 4 | 4 | 4 |
| | | 7d 80°C | 1 | 4 | 5 | 5 | 4 | 5 |

| | | | | | | | | |
|---|---|---|---|---|---|---|---|---|
| ¹ in Gewichtsteilen Komponente-1/Komponente-2 | | | | | | | | |

**Tabelle 2: Zusammensetzung (in Gewichtsteilen) von Z7 bis Z12 und Eigenschaften der Haftverbunde damit.**

| **Zusammensetzung** | | | | **Z7** | **Z8 (Ref.)** | **Z9 (Ref.)** | **Z10 (Ref.)** | **Z11 (Ref.)** | **Z12 (Ref.)** |
|---|---|---|---|---|---|---|---|---|---|
| **Komponente-1:** | | | | 100.0 | 100.0 | 100.0 | 100.0 | 100.0 | 100.0 |
| | | SikaForce^{®}-7777 L05, A-Komp. | | | | | | | |
| **Komponente-2:** | | | | 80.0 | 80.0 | 80.0 | 80.0 | 80.0 | 80.0 |
| | Adiprene^{®} LFM E730 | | | | | | | | |
| Weichmacher | | | | **Polyether-1** 20.0 | **DINP** 20.0 | **DINCH** 20.0 | **DOA** 20.0 | **ATBC** 20.0 | **FAE** 20.0 |
| Mischungsverhältnis¹ | | | | 100/72 | 100/72 | 100/72 | 100/72 | 100/72 | 100/72 |
| Biegung ***PC1*** | | | 1d 80°C | schwach | mittel | mittel | mittel | mittel | mittel |
| | | | 7d 80°C | schwach | stark | stark | stark | stark | stark |
| Crazing ***PC1*** | | | 1d 80°C | 1 | 4 | 4 | 4 | 4 | 4 |
| | | | 7d 80°C | 3 | 5 | 5 | 5 | 5 | 5 |

| | | | | | | | | | |
|---|---|---|---|---|---|---|---|---|---|
| ¹ in Gewichtsteilen Komponente-1/Komponente-2 | | | | | | | | | |

### Zusammensetzungen Z13 bis Z16 (einkomponentig)

Für jede Zusammensetzung wurden die in Tabelle 3 angegebenen Inhaltsstoffe in den angegebenen Mengen (in Gewichtsteilen) mittels eines Zentrifugalmischers (SpeedMixer^{™} DAC 150, FlackTek Inc.) unter Feuchtigkeitsausschluss während einer Minute bei 3000 rpm vermischt.

Von jeder Zusammensetzung wurde ein Haftverbund mit Polycarbonat hergestellt. Dazu wurde die Zusammensetzung auf eine Platte aus Polycarbonat ***PC1*** (=Makrolon^{®}GP Clear 099, von Covestro AG) der Grösse 150 x 30 x 2 mm in der Mitte in Form einer Raupe auf einer Fläche von 10 x 30 mm in einer Schichtdicke von ca. 2 mm aufgebracht und während 7 Tagen im Normklima gelagert bzw. ausgehärtet. Der Haftverbund wurde dann quer über ein auf einem Brett angebrachtes Rundholz mit einem Durchmesser von 35 mm gespannt und an den Enden so befestigt, dass der Haftverbund in gebogener Stellung fixiert war. Diese Anordnung wurde 24 h in einem Umluftofen bei 80°C gelagert und anschliessend nach einer Konditionierung von 24 h im Normklima optisch anhand der für die Zusammensetzung **Z1** angegebenen Skala daraufhin beurteilt, ob im Polycarbonat Spannungsrisse sichtbar waren. Das Resultat ist angegeben als "**Crazing *PC1***"

Zur Bestimmung der mechanischen Eigenschaften wurde jede Zusammensetzung auf eine PTFE-beschichteten Folie zu einem Film von 2 mm Dicke aufgebracht, dieser während 14 Tagen im Normklima gelagert, einige Hanteln mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf **Zugfestigkeit** (Bruchkraft), **Bruchdehnung, E-Modul 5%** (bei 0.5-5% Dehnung) und **E-Modul 50%** (bei 0.5-50% Dehnung) geprüft.

Zur Bestimmung der Festigkeit einer Verklebung wurde die Zugscherfestigkeit (**ZSF**) auf Glas bestimmt. Dazu wurden Verbundkörper hergestellt, indem zwei mit Isopropanol entfettete und mit Sika^{®} Primer 207 (von Sika Schweiz AG) vorbehandelte Glasplatten so verklebt wurden, dass die überlappende Klebeverbindung eine Dimension von 12 x 25 mm und eine Dicke von 4 mm aufwies und die Glasplatten an den Kopfenden vorstanden. Nach einer Lagerung der Verbundkörper während 7 d im Normklima wurde die Zugscherfestigkeit nach DIN EN 1465 bei einer Zuggeschwindigkeit von 20 mm/min geprüft.

Die **Shore A**-Härte wurde nach DIN 53505 an während 7d im Normklima gehärteten Prüfkörpern bestimmt.

Die Resultate sind in Tabelle 3 angegeben.

Mit "(Ref.)" bezeichnete Zusammensetzungen sind Vergleichsbeispiele.

**Tabelle 3: Zusammensetzung (in Gewichtsteilen) und Eigenschaften von Z13 bis Z16.**

| **Zusammensetzung** | **Z13 (Ref.)** | **Z14** | **Z15** | **Z16** |
|---|---|---|---|---|
| **Polymer P1** | 17.5 | 17.5 | 17.5 | 17.5 |
| **Polymer P2** | 17.5 | 17.5 | 17.5 | 17.5 |
| Weichmacher | **DINP** 20.4 | **Polyether-1** 20.4 | **Polyether-2** 20.4 | **Polyether-4** 20.4 |
| Russ | 10.0 | 10.0 | 10.0 | 10.0 |
| Kreide | 32.0 | 32.0 | 32.0 | 32.0 |
| pyrogene Kieselsäure | 2.0 | 2.0 | 2.0 | 2.0 |
| DMDEE | 0.2 | 0.2 | 0.2 | 0.2 |
| pTSI | 0.4 | 0.4 | 0.4 | 0.4 |
| Crazing ***PC1*** | 4 | 1 | 1 | 0 |
| Zugfestigkeit [MPa] | 3.8 | 5.2 | 5.5 | 5.8 |
| Bruchdehnung [%] | 772 | 831 | 856 | 816 |
| E-Modul 5% [MPa] | 1.57 | 1.59 | 1.56 | 1.74 |
| E-Modul 50% [MPa] | 0.83 | 0.90 | 0.86 | 1.01 |
| ZSF (Glas) [MPa] | 2.41 | 2.71 | 2.13 | 2.74 |
| Shore A | 38 | 39 | 38 | 39 |

### Zusammensetzungen Z17 bis Z20 (einkomponentig)

Für jede Zusammensetzung wurden die in Tabelle 4 angegebenen Inhaltsstoffe in den angegebenen Mengen (in Gewichtsteilen) mittels eines Zentrifugalmischers (SpeedMixer^{™} DAC 150, FlackTek Inc.) unter Feuchtigkeitsausschluss während einer Minute bei 3000 rpm vermischt.

Von jeder Zusammensetzung wurde ein Haftverbund mit Polycarbonat hergestellt. Dazu wurde die Zusammensetzung auf eine Platte aus Polycarbonat ***PC2*** (= Makrolon^{®} AL2447, von Covestro AG) der Grösse 150 x 70 x 5 mm in der Mitte in Form einer Raupe auf einer Fläche von 10 x 100 mm in einer Schichtdicke von ca. 2 mm aufgebracht und während 7 Tagen im Normklima gelagert bzw. ausgehärtet. Der Haftverbund wurde dann quer über ein auf einem Brett angebrachtes Rundholz mit einem Durchmesser von 35 mm gespannt und an den Enden so befestigt, dass der Haftverbund in gebogener Stellung fixiert war. Diese Anordnung wurde 24 h in einem Umluftofen bei 80°C gelagert und anschliessend nach einer Konditionierung von 24 h im Normklima optisch daraufhin beurteilt, wie stark die Platte im gebogenen Zustand verharrte und ob im Polycarbonat Spannungsrisse sichtbar waren. Die Resultate sind angegeben als "**Biegung *PC2***" bzw. "**Crazing *PC2***"*.* Für das Crazing wurde die für die Zusammensetzung **Z1** angegebene Skala verwendet.

Die mechanischen Eigenschaften **Zugfestigkeit**, **Bruchdehnung**, **E-Modul 5%** und **E-Modul 50%** wurden wie für Zusammensetzung **Z13** beschrieben geprüft. Die Resultate sind in Tabelle 4 angegeben.

**Tabelle 4: Zusammensetzung (in Gewichtsteilen) und Eigenschaften von Z17 bis Z20. "n.b." steht für "nicht bestimmt"**

| **Zusammensetzung** | **Z17** | **Z18** | **Z19** | **Z20** |
|---|---|---|---|---|
| **Polymer P1** | 30.0 | 30.0 | 30.0 | 30.0 |
| **Polymer P3** | 5.0 | 5.0 | 5.0 | 5.0 |
| Weichmacher | **Polyether-3** 20.4 | **Polyether-4** 20.4 | **Polyether-5** 20.4 | **Polyether-6** 20.4 |
| Russ | 10.0 | 10.0 | 10.0 | 10.0 |
| Kreide | 32.0 | 32.0 | 32.0 | 32.0 |
| pyrogene Kieselsäure | 2.0 | 2.0 | 2.0 | 2.0 |
| DMDEE | 0.2 | 0.2 | 0.2 | 0.2 |
| pTSI | 0.4 | 0.4 | 0.4 | 0.4 |
| Biegung ***PC2*** | schwach | schwach | schwach | schwach |
| Crazing ***PC2*** | 2 | 1 | 0 | 0 |
| Zugfestigkeit [MPa] | 6.4 | 6.7 | n.b. | 6.9 |
| Bruchdehnung [%] | 960 | 970 | n.b. | 950 |
| E-Modul 5% [MPa] | 1.76 | 1.76 | n.b. | 1.76 |
| E-Modul 50% [MPa] | 0.89 | 0.91 | n.b. | 0.84 |

## Patentansprüche

1. Haftverbund zwischen (i) mindestens einem thermoplastischen Kunststoff und (ii) einer Elastomer-Zusammensetzung, welche mindestens einen Polyether mit blockierten Hydroxylgruppen als Weichmacher enthält, wobei der Polyether mit blockierten Hydroxylgruppen frei von Reaktivgruppen ist, welche mit Feuchtigkeit oder mit in der Zusammensetzung vorhandenen Inhaltsstoffen Vernetzungsreaktionen eingehen.

2. Haftverbund gemäss Anspruch 1, **dadurch gekennzeichnet, dass** der thermoplastische Kunststoff ein Polycarbonat oder Polystyrol ist.

3. Haftverbund gemäss Anspruch 1 oder 2, **dadurch gekennzeichnet, dass** die blockierten Hydroxylgruppen ausgewählt sind aus der Gruppe bestehend aus Ester-, Acetoester-, Carbonat- und Urethangruppen.

4. Haftverbund gemäss einem der Ansprüche 1 bis 3, **dadurch gekennzeichnet, dass** im Polyether 70 bis 100 Gewichts-% der Repetiereinheiten aus 1,2-Propylenoxy-Gruppen und 0 bis 30 Gewichts-% der Repetiereinheiten aus 1,2-Ethylenoxy-Gruppen bestehen.

5. Haftverbund gemäss einem der Ansprüche 1 bis 4, **dadurch gekennzeichnet**, der Polyether mit blockierten Hydroxylgruppen ein mittleres Molekulargewicht Mₙ im Bereich von 600 bis 12'500 g/mol aufweist, bestimmt mittels Gelpermeationschromatographie (GPC) gegen Polystyrol als Standard mit Tetrahydrofuran als mobiler Phase, Brechungsindex-Detektor und Auswertung ab 200 g/mol.

6. Haftverbund gemäss einem der Ansprüche 1 bis 5, **dadurch gekennzeichnet, dass** der Polyether mit blockierten Hydroxylgruppen abgeleitet ist von mindestens einem hydroxyfunktionellen Polyether ausgewählt aus der Gruppe bestehend aus
- Alkohol-, insbesondere n-Butanol-, gestarteten Polyoxypropylen-Monolen mit einer OH-Zahl im Bereich von 25 bis 90 mg KOH/g,
- Polyoxypropylen-Diolen mit einer OH-Zahl im Bereich von 9 bis 155 mg KOH/g,
- Trimethylolpropan- oder insbesondere Glycerin-gestarteten, gegebenenfalls Ethylenoxid-terminierten, Polyoxypropylen-Triolen mit einer mittleren OH-Funktionalität im Bereich von 2.2 bis 3 und einer OH-Zahl im Bereich von 20 bis 230 mg KOH/g, und
- Zuckeralkohol-gestarteten Polyoxypropylenpolyolen mit einer mittleren OH-Funktionalität im Bereich von 3 bis 6, insbesondere mit Threit, Erythrit, Xylit, Mannit oder Sorbit als Startermolekül.

7. Haftverbund gemäss Anspruch 6, **dadurch gekennzeichnet, dass** der Polyether mit blockierten Hydroxylgruppen abgeleitet ist von einem Alkohol-, insbesondere n-Butanol-, gestarteten Polyoxypropylen-Monol mit einer OH-Zahl im Bereich von 25 bis 90 mg KOH/g oder einem Polyoxypropylen-Diol mit einer OH-Zahl im Bereich von 45 bis 125 mg KOH/g.

8. Haftverbund gemäss Anspruch 6, **dadurch gekennzeichnet, dass** der Polyether mit blockierten Hydroxylgruppen abgeleitet ist von einem Polyoxypropylen-Diol mit einer OH-Zahl im Bereich von 14 bis 45 mg KOH/g oder einem Trimethylolpropan- oder insbesondere Glycerin-gestarteten, gegebenenfalls Ethylenoxid-terminierten, Polyoxypropylen-Triol mit einer OH-Zahl im Bereich von 20 bis 56 mg KOH/g.

9. Haftverbund gemäss einem der Ansprüche 1 bis 8, **dadurch gekennzeichnet, dass** die Elastomer-Zusammensetzung mindestens ein ausgehärtetes Polyurethanpolymer oder ausgehärtetes silanmodifiziertes Polymer enthält.

10. Haftverbund gemäss einem der Ansprüche 1 bis 9, **dadurch gekennzeichnet, dass** die Elastomer-Zusammensetzung 5 bis 40 Gewichts-% Polyether mit blockierten Hydroxylgruppen enthält.

11. Haftverbund gemäss einem der Ansprüche 1 bis 10, **dadurch gekennzeichnet, dass** die Elastomer-Zusammensetzung eine Zugfestigkeit von mindestens 1 MPa und eine Bruchdehnung von mindestens 50 %, bestimmt bei 23 °C an hantelförmigen Prüfkörpern mit einer Dicke von 2 mm, einer Länge von 75 mm, einer Steglänge von 30 mm und einer Stegbreite von 4 mm gemäss DIN EN 53504, aufweist.

12. Haftverbund gemäss einem der Ansprüche 1 bis 11, **dadurch gekennzeichnet, dass** er Teil eines Artikels ist, welcher mit der Elastomer-Zusammensetzung verklebt oder abgedichtet oder beschichtet ist.

13. Verfahren zur Herstellung des Haftverbundes gemäss einem der Ansprüche 1 bis 12, umfassend die Schritte
(a) Bereitstellen von mindestens einem thermoplastischen Kunststoff-Substrat,
(b) Bereitstellen einer härtbaren Zusammensetzung, welche mindestens einen Polyether mit blockierten Hydroxylgruppen als Weichmacher enthält, wobei der Polyether mit blockierten Hydroxylgruppen frei von Reaktivgruppen ist, welche mit Feuchtigkeit oder mit in der Zusammensetzung vorhandenen Inhaltsstoffen Vernetzungsreaktionen eingehen,
(c) Applizieren der härtbaren Zusammensetzung auf das Kunststoff-Substrat,
(d) Aushärten der härtbaren Zusammensetzung zur Elastomer-Zusammensetzung.

14. Verfahren gemäss Anspruch 13, **dadurch gekennzeichnet, dass** die härtbare Zusammensetzung mindestens ein Isocyanat- und/oder Silangruppen-haltiges Polymer enthält.

15. Verwendung einer härtbaren Zusammensetzung umfassend mindestens ein Isocyanat- und/oder Silangruppen-haltiges Polymer und mindestens einen Polyether mit blockierten Hydroxylgruppen zum Verkleben, Abdichten oder Beschichten von mindestens einem thermoplastischen Kunststoff-Substrat, wobei der Polyether mit blockierten Hydroxylgruppen frei von Reaktivgruppen ist, welche mit Feuchtigkeit oder mit in der Zusammensetzung vorhandenen Inhaltsstoffen Vernetzungsreaktionen eingehen.

## Claims

1. Adhesive bond between (i) at least one thermoplastic and (ii) an elastomer composition containing at least one polyether having blocked hydroxyl groups as plasticizer, where the polyether having blocked hydroxyl groups is free of reactive groups that enter into crosslinking reactions with moisture or with constituents present in the composition.

2. Adhesive bond according to Claim 1, **characterized in that** the thermoplastic is a polycarbonate or polystyrene.

3. Adhesive bond according to Claim 1 or 2, **characterized in that** the blocked hydroxyl groups are selected from the group consisting of ester, aceto ester, carbonate and urethane groups.

4. Adhesive bond according to any of Claims 1 to 3, **characterized in that** 70% to 100% by weight of the repeat units in the polyether consist of 1,2-propyleneoxy groups, and 0% to 30% by weight of the repeat units of 1,2-ethyleneoxy groups.

5. Adhesive bond according to any of Claims 1 to 4, **characterized in that** the polyether having blocked hydroxyl groups has an average molecular weight Mₙ in the range from 600 to 12 500 g/mol, determined by means of gel permeation chromatography (GPC) versus polystyrene standard with tetrahydrofuran as mobile phase, refractive index detector and evaluation from 200 g/mol.

6. Adhesive bond according to any of Claims 1 to 5, **characterized in that** the polyether having blocked hydroxyl groups is derived from at least one hydroxy-functional polyether selected from the group consisting of
- alcohol-started, especially n-butanol-started, polyoxypropylene monools having an OH number in the range from 25 to 90 mg KOH/g,
- polyoxypropylene diols having an OH number in the range from 9 to 155 mg KOH/g,
- trimethylolpropane- or especially glycerol-started, optionally ethylene oxide-terminated polyoxypropylene triols having an average OH functionality in the range from 2.2 to 3 and an OH number in the range from 20 to 230 mg KOH/g, and
- sugar alcohol-started polyoxypropylene polyols having an average OH functionality in the range from 3 to 6, especially with threitol, erythritol, xylitol, mannitol or sorbitol as starter molecule.

7. Adhesive bond according to Claim 6, **characterized in that** the polyether having blocked hydroxyl groups is derived from an alcohol-started, especially n-butanol-started, polyoxypropylene monool having an OH number in the range from 25 to 90 mg KOH/g or a polyoxypropylene diol having an OH number in the range from 45 to 125 mg KOH/g.

8. Adhesive bond according to Claim 6, **characterized in that** the polyether having blocked hydroxyl groups is derived from a polyoxypropylene diol having an OH number in the range from 14 to 45 mg KOH/g or a trimethylolpropane- or especially glycerol-started, optionally ethylene oxide-terminated polyoxypropylene triol having an OH number in the range from 20 to 56 mg KOH/g.

9. Adhesive bond according to any of Claims 1 to 8, **characterized in that** the elastomer composition comprises at least one cured polyurethane polymer or cured silane-modified polymer.

10. Adhesive bond according to any of Claims 1 to 9, **characterized in that** the elastomer composition contains 5% to 40% by weight of polyethers having blocked hydroxyl groups.

11. Adhesive bond according to any of Claims 1 to 10, **characterized in that** the elastomer composition has a tensile strength of at least 1 MPa and an elongation at break of at least 50%, determined at 23°C on dumbbell-shaped test specimens having a thickness of 2 mm, a length of 75 mm, a bar length of 30 mm and a bar width of 4 mm to DIN EN 53504.

12. Adhesive bond according to any of Claims 1 to 11, **characterized in that** it is part of an article bonded or sealed or coated with the elastomer composition.

13. Process for producing the adhesive bond according to any of Claims 1 to 12, comprising the steps of
(a) providing at least one thermoplastic substrate,
(b) providing a curable composition comprising at least one polyether having blocked hydroxyl groups as plasticizer, where the polyether having blocked hydroxyl groups is free of reactive groups that enter into crosslinking reactions with moisture or with constituents present in the composition,
(c) applying the curable composition to the plastic substrate,
(d) curing the curable composition to give the elastomer composition.

14. Process according to Claim 13, **characterized in that** the curable composition comprises at least one polymer containing isocyanate and/or silane groups.

15. Use of a curable composition comprising at least one polymer containing isocyanate and/or silane groups and at least one polyether having blocked hydroxyl groups for bonding, sealing or coating of at least one thermoplastic substrate, where the polyether having blocked hydroxyl groups is free of reactive groups that enter into crosslinking reactions with moisture or with constituents present in the composition.

## Revendications

1. Raccordement adhésif entre (i) au moins un plastique thermoplastique et (ii) une composition élastomère, qui contient comme plastifiant un polyéther ayant des groupes hydroxyle bloqués, le polyéther ayant des groupes hydroxyle bloqués étant exempt de groupes réactifs qui entrent dans des réactions de réticulation avec l'humidité ou avec des constituants présents dans la composition.

2. Raccordement adhésif selon la revendication 1, **caractérisé en ce que** le plastique thermoplastique est un polycarbonate ou un polystyrène.

3. Raccordement adhésif selon la revendication 1 ou 2, **caractérisé en ce que** les groupes hydroxyle bloqués sont choisis dans le groupe consistant en les groupes ester, acétoester, carbonate et uréthane.

4. Raccordement adhésif selon l'une des revendications 1 à 3, **caractérisé en ce que** dans le polymère, 70 à 100 % en poids des motifs répétitifs sont constitués de groupes 1,2-propylènoxy et 0 à 30 % en poids des motifs répétitifs sont constitués de groupes 1,2-éthylènoxy.

5. Raccordement adhésif selon l'une des revendications 1 à 4, **caractérisé en ce que** le polyéther ayant des groupes hydroxyle bloqués présente une masse moléculaire moyenne Mₙ dans la plage de 600 à 12 500 g/mol, déterminée par chromatographie par perméation de gel (GPC) contre du polystyrène en tant qu'étalon avec du tétrahydrofurane en tant que phase mobile, détecteur d'indice de réfraction et évaluation à partir de 200 g/mol.

6. Raccordement adhésif selon l'une des revendications 1 à 5, **caractérisé en ce que** le polyéther ayant des groupes hydroxyle bloqués dérive d'au moins un polyéther hydroxy-fonctionnel choisi dans le groupe consistant en
- les polyoxypropylène-monools amorcés par un alcool, en particulier le n-butanol, ayant un indice d'OH dans la plage de 25 à 90 mg KOH/g,
- les polyoxypropylène-diols ayant un indice d'OH dans la plage de 9 à 155 mg KOH/g,
- les polyoxypropylène-triols éventuellement à terminaison oxyde d'éthylène, amorcés par le triméthylolpropane ou en particulier le glycérol, ayant une fonctionnalité OH moyenne dans la plage de 2,2 à 3 et un indice d'OH dans la plage de 20 à 230 mg KOH/g, et
- les polyoxypropylène-polyols amorcés par un alcool de sucre, ayant une fonctionnalité OH moyenne dans la plage de 3 à 6, en particulier avec le thréitol, l'érythritol, le xylitol, le mannitol ou le sorbitol en tant que molécule d'amorçage.

7. Raccordement adhésif selon la revendication 6, **caractérisé en ce que** le polyéther ayant des groupes hydroxyle bloqués dérive d'un polyoxypropylène-monool amorcé par un alcool, en particulier le n-butanol, ayant un indice d'OH dans la plage de 25 à 90 mg KOH/g et d'un polyoxypropylène-diol ayant un indice d'OH dans la plage de 45 à 125 mg KOH/g.

8. Raccordement adhésif selon la revendication 6, **caractérisé en ce que** le polyéther ayant des groupes hydroxyle bloqués dérive d'un polyoxypropylène-diol ayant un indice d'OH dans la plage de 14 à 45 mg KOH/g ou d'un polyoxypropylène-triol, éventuellement à terminaison oxyde d'éthylène, amorcé par le triméthylolpropane ou en particulier le glycérol, ayant un indice d'OH dans la plage de 20 à 56 mg KOH/g.

9. Raccordement adhésif selon l'une des revendications 1 à 8, **caractérisé en ce que** la composition élastomère contient au moins un polymère d'uréthane durci ou un polymère durci modifié par un silane.

10. Raccordement adhésif selon l'une des revendications 1 à 9, **caractérisé en ce que** la composition élastomère contient 5 à 40 % en poids du polyéther ayant des groupes hydroxyle bloqués.

11. Raccordement adhésif selon l'une des revendications 1 à 10, **caractérisé en ce que** la composition élastomère présente une résistance à la traction d'au moins 1 MPa et un allongement à la rupture d'au moins 50 %, déterminé selon DIN EN 53504 à 23° C sur des éprouvettes en haltère ayant une épaisseur de 2 mm, une longueur de 75 mm, une longueur de barre de 30 mm et une largeur de barre de 4 mm.

12. Raccordement adhésif selon l'une des revendications 1 à 11, **caractérisé en ce qu'**il s'agit d'une partie d'un article qui est collé avec la composition élastomère ou est étanché avec celle-ci ou revêtu de celle-ci.

13. Procédé de fabrication du raccordement adhésif selon l'une des revendications 1 à 12, comprenant les étapes suivantes :
(a) fourniture d'au moins un substrat plastique thermoplastique,
(b) fourniture d'une composition durcissable qui contient au moins un polyéther ayant des groupes hydroxyle bloqués en tant que plastifiant, le polyéther ayant des groupes hydroxyle bloqués étant exempt de groupes réactifs qui entrent en réactions de réticulation avec l'humidité ou avec des constituants présents dans la composition,
(c) application de la composition durcissable sur le substrat plastique,
(d) durcissement de la composition durcissable pour obtenir la composition élastomère.

14. Procédé selon la revendication 13, **caractérisé en ce que** la composition durcissable contient au moins un polymère contenant des groupes isocyanate et/ou silane.

15. Utilisation d'une composition durcissable comprenant au moins un polymère contenant des groupes isocyanate et/ou silane et au moins un polyéther ayant des groupes hydroxyle bloqués, pour coller, étanchéifier ou revêtir au moins un substrat plastique thermoplastique, le polyéther ayant des groupes hydroxyle bloqués étant exempt de groupes réactifs qui entrent dans des réactions de réticulation avec l'humidité ou avec les constituants présents dans la composition.
